# EUROPÄISCHE PATENTSCHRIFT

(11) **EP 3 483 097 B1**
(45) Veröffentlichungstag und Bekanntmachung des Hinweises auf die Patenterteilung: **22.03.2023**
(21) Anmeldenummer: 18198177.0
(22) Anmeldetag: 02.10.2018
(51) Int. Cl.: B65G 47/91, B23Q 1/03, B25B 11/00

(54) **WERKSTÜCK-HALTEVORRICHTUNG SOWIE WERKSTÜCK-HANDLINGVORRICHTUNG UND MASCHINELLE ANORDNUNG ZUM BEARBEITEN VON WERKSTÜCKEN MIT EINER WERKSTÜCK-HALTEVORRICHTUNG**
WORKPIECE HOLDING DEVICE AND WORKPIECE HANDLING DEVICE AND MECHANICAL CONFIGURATION FOR THE MACHINING OF WORKPIECES WITH A WORKPIECE HOLDING DEVICE
DISPOSITIF DE RETENUE DE PIÈCE AINSI QUE DISPOSITIF DE MANIPULATION DE PIÈCE ET AGENCEMENT D'USINAGE DES PIÈCES MÉCANIQUES DOTÉ D'UN DISPOSITIF DE RETENUE

(30) Priorität: 23.10.2017 DE 102017218877
(43) Veröffentlichungstag der Anmeldung: 15.05.2019
(73) Patentinhaber: TRUMPF Werkzeugmaschinen GmbH + Co. KG, 71254 Ditzingen (DE); J. Schmalz GmbH, 72293 Glatten (DE)
(72) Erfinder: BUSCH, Marcus, 01324 Dresden (DE); KOWAL, Franz, 01309 Dresden (DE); EISELE, Thomas, 72275 Alpirsbach-Peterzell (DE); DUNKMANN, Walter, 76530 Baden-Baden (DE); WERNI, Benjamin, 71149 Bondorf (DE)
(74) Vertreter: Kohler Schmid Möbus Patentanwälte

(56) Entgegenhaltungen:
- EP-A1- 1 249 409
- EP-A1- 1 477 439
- DE-A1-102004 025 781
- US-A- 5 372 357
- US-A- 5 457 868
- US-A- 5 551 677

## Beschreibung

Die Erfindung betrifft eine Werkstück-Haltevorrichtung mit einer Tragstruktur sowie mit Halteeinheiten, die an der Tragstruktur vorgesehen sind und die jeweils aufweisen:
- ein Halteelement,
- eine gesteuert betätigbare Schaltvorrichtung, mittels derer das Halteelement in einen Funktionsbereitschaftszustand und in einen Außerfunktionszustand schaltbar ist, wobei das in den Funktionsbereitschaftszustand geschaltete Halteelement, nicht aber das in den Außerfunktionszustand geschaltete Halteelement mit einer Quelle für ein Funktionsmedium verbunden ist, mittels dessen an dem Halteelement eine auf ein Werkstück ausübbare Haltekraft erzeugbar ist, sowie
- einen gesteuert betätigbaren motorischen Positionierantrieb, mittels dessen das Halteelement relativ zu der Tragstruktur längs einer Zustellbahn aus einer zurückgesetzten Position in eine vorgesetzte Position zustellbar ist und der einen mittels eines strömungsfähigen Antriebsdruckmediums betriebenen, vorzugsweise pneumatischen, Antriebsmotor aufweist, der als Kolben-Zylinder-Einheit ausgebildet ist und auf den eine das strömungsfähige Antriebsdruckmedium erzeugende Antriebsdruckquelle gesteuert aufschaltbar ist,
   wobei
- der motorische Positionierantrieb wenigstens einer Halteeinheit ein Antriebselement aufweist, das aufgrund der Betätigung des motorischen Positionierantriebs mit einer Antriebsbewegung antreibbar ist und das aufgrund einer Antriebsbewegung das Halteelement der betreffenden Halteeinheit längs der Zustellbahn aus der zurückgesetzten Position in die vorgesetzte Position zustellt, wobei das in die vorgesetzte Position zugestellte Halteelement gegen eine Zustellung in Richtung auf die zurückgesetzte Position arretierbar ist,
- die motorischen Positionierantriebe der Halteeinheiten derart aufeinander abgestimmt betätigbar sind, dass die Halteelemente der Halteeinheiten längs der Zustellbahnen unter Ausbildung einer unebenen Haltekontur zustellbar sind,
- mittels der jeweiligen Schaltvorrichtung das Halteelement einer Halteeinheit derart schaltbar ist, dass das Halteelement in der zurückgesetzten Position in den Außerfunktionszustand und in der vorgesetzten Position in den Funktionsbereitschaftszustand geschaltet ist,
- an wenigstens einer Halteeinheit das Antriebselement des motorischen Positionierantriebs als schaltendes Antriebselement ausgebildet ist und ein Schaltelement der Schaltvorrichtung für das Halteelement der Halteeinheit ausbildet,
- aufgrund der Betätigung des motorischen Positionierantriebs der Halteeinheit das betreffende Halteelement mittels des schaltenden Antriebselements aus der zurückgesetzten Position in die vorgesetzte Position zustellbar und aus dem Außerfunktionszustand in den Funktionsbereitschaftszustand schaltbar ist und
- als schaltendes Antriebselement ein Stößel vorgesehen und in einem Führungsraum eines Führungsgehäuses der Halteeinheit zur Ausführung einer durch Betätigung des motorischen Positionierantriebs erzeugten Antriebs-Schaltbewegung geführt ist, wobei aufgrund der Antriebs-Schaltbewegung des Stößels das Halteelement der Halteeinheit aus der zurückgesetzten Position in die vorgesetzte Position zustellbar und aus dem Außerfunktionszustand in den Funktionsbereitschaftszustand schaltbar ist.

Die Erfindung betrifft außerdem eine Werkstück-Handlingvorrichtung und eine maschinelle Anordnung zum Bearbeiten von Werkstücken mit einer Werkstück-Haltevorrichtung der eingangs genannten Art.

Werkstück-Haltevorrichtungen der genannten Art werden beispielsweise an Werkzeugmaschinen für die Blechbearbeitung zum Fixieren von Werkstücken während der Bearbeitung oder für das Werkstückhandling vor und/oder nach der Werkstückbearbeitung eingesetzt.

Gattungsgemäßer Stand der Technik ist offenbart in US 5,372,357 A. Dieses Dokument offenbart die Merkmale des Oberbegriffs des Anspruchs 1 und betrifft einen Arbeitstisch mit einer Mehrzahl von Unterdrucksaugern. Die Unterdrucksauger weisen jeweils einen Saugnapf auf, der mittels einer Kolben-Zylinder-Einheit angehoben und abgesenkt werden kann. Zu diesem Zweck ist der Saugnapf an einem Hubstempel befestigt, der an dem Kolben der Kolben-Zylinder-Einheit angebracht und außerhalb der Kolben-Zylinder-Einheit in einer Büchse geführt ist. Die Büchse ist in einer Saugkammer angeordnet und mit einer Querbohrung versehen. Bei angehobenem Saugnapf liegt die Querbohrung der Büchse auf Höhe einer radialen Anschlussbohrung des Hubstempels, die ihrerseits in eine axiale Saugbohrung des Hubstempels mündet. Die axiale Saugbohrung des Hubstempels mündet in das Innere des Saugnapfes. Aufgrund der in der beschriebenen Weise hergestellten Verbindung zwischen der Saugkammer und dem Inneren des Saugnapfes liegt bei angehobenem Saugnapf der im Innern der Saugkammer herrschende Unterdruck an dem Saugnapf an. In der angehobenen Position können Saugnäpfe von Unterdrucksaugern in einer nicht im Einzelnen angegebenen Weise arretiert werden.

Weiterer Stand der Technik ist offenbart in US 6,250,619 B1. Der Stand der Technik betrifft eine Werkstückauflage, die an einer Werkzeugmaschine genutzt wird, um Werkstücke mit unebener Oberflächenkontur während der Bearbeitung zu lagern und zu fixieren. Zu diesem Zweck weist die vorbekannte Werkstückauflage eine Mehrzahl rohrförmiger Auflageelemente auf, die mit paralleler Ausrichtung nebeneinander angeordnet und zur Ausbildung einer an die Oberflächenkontur des zu lagernden Werkstücks angepassten unebenen Auflagekontur unabhängig voneinander in ihrer Längsrichtung zustellbar sind. An den werkstückseitigen Enden der Auflageelemente ist als Halteelement jeweils ein Sauger angebracht, an den mittels einer Unterdruckquelle als Funktionsmedium ein Unterdruck angelegt werden kann. In einem Ausgangszustand der Werkstückauflage sind die Auflageelemente in ein Gehäuse der Werkstückauflage zurückgezogen und die Unterdruckquelle der Werkstückauflage ist ausgeschaltet beziehungsweise eine Verbindungsleitung zwischen der Unterdruckquelle und den Saugern der Auflageelemente ist unterbrochen. Zur Konfiguration der Werkstückauflage in Abhängigkeit von einem zu lagerndem Werkstück werden die Auflageelemente ausgehend von ihrer Ausgangsposition jeweils mittels einer zu diesem Zweck mit Druckluft beaufschlagten Kolben-Zylinder-Einheit in ihrer Längsrichtung in die gewünschte Position zugestellt und in dieser Position verriegelt. Durch zusätzliches Schalten eines in der Verbindungsleitung zwischen dem Sauger eines Auflageelements und der Unterdruckquelle vorgesehenen Ventils wird die zunächst unterbrochene Verbindungsleitung durchlässig. Dadurch gelangt der betreffende Sauger aus dem Außerfunktionszustand in den Funktionsbereitschaftszustand. Erzeugt nun die Unterdruckquelle einen Unterdruck, kann der Sauger auf das zu fixierende Werkstück die gewünschte Haltekraft ausüben.

Eine Werkstück-Haltevorrichtung bereitzustellen, an welcher ein Halteelement auf effiziente Art und Weise in einer vorgesetzten Funktionsbereitschafts- beziehungsweise Funktionsposition arretiert werden kann, ist Aufgabe der vorliegenden Erfindung.

Erfindungsgemäß gelöst wird diese Aufgabe durch die Werkstück-Haltevorrichtung gemäß Patentanspruch 1, die Werkstück-Handlingvorrichtung gemäß Patentanspruch 14 und die maschinelle Anordnung gemäß Patentanspruch 15.

Anspruchsgemäß wird an einer Werkstück-Haltevorrichtung mit einem schaltenden Antriebselement ein und dasselbe Bauteil genutzt, um ein Halteelement der Werkstück-Haltevorrichtung zum einen aus der zurückgesetzten Position in die vorgesetzte Position zuzustellen und gleichzeitig aus dem Außerfunktionszustand in den Funktionsbereitschaftszustand zu schalten.

Zu diesem Zweck ist als schaltendes Antriebselement ein Stößel vorgesehen, der in einem Führungsraum eines Führungsgehäuses der Halteeinheit zur Ausführung einer mittels des motorischen Positionierantriebs erzeugten Antriebs-Schaltbewegung geführt ist, wobei aufgrund der Antriebs-Schaltbewegung des Stößels das Halteelement der Halteeinheit aus der zurückgesetzten Position in die vorgesetzte Position zustellbar und aus dem Außerfunktionszustand in den Funktionsbereitschaftszustand schaltbar ist. Bevorzugtermaßen ist der Stößel dabei längs einer Bewegungsachse geführt, in welcher die Zustellbahn liegt, entlang derer das Halteelement aus der zurückgesetzten Position in die vorgesetzte Position zugestellt wird.

Als motorischer Positionierantrieb ist ein vorzugsweise pneumatischer Druckmittelantrieb vorgesehen mit einer Kolben-Zylinder-Einheit als Antriebsmotor. Erfindungsgemäß bildet der Kolben einen Stößel, der seinerseits als schaltendes Antriebselement vorgesehen ist. Der Zylinder der Kolben-Zylinder-Einheit bildet ein den Stößel führendes Führungsgehäuse. Der den Stößel beziehungsweise den Kolben aufnehmende Führungsraum des Führungsgehäuses wird dabei von einer als Kolbenfläche vorgesehenen Fläche des Stößels/Kolbens begrenzt und kann gesteuert auf eine Antriebsdruckquelle aufgeschaltet werden, die ihrerseits das zur Erzeugung einer Antriebs-Schaltbewegung des Stößels/Kolbens benötigte strömungsfähige Antriebsdruckmedium bereitstellt.

In bevorzugter Ausgestaltung der erfindungsgemäßen Werkstück-Haltevorrichtung ist der Einfachheit halber das Halteelement mit dem schaltenden Antriebselement mechanisch verbunden und/oder das schaltende Antriebselement ist mittels des motorischen Positionierantriebs direkt antreibbar, das heißt ohne Zwischenschaltung eines Getriebes zwischen einen Antriebsmotor des Positionierantriebs und das Halteelement.

Eine oder mehrere baugleiche Halteeinheiten der erfindungsgemäßen Werkstück-Haltevorrichtung können einen entsprechenden motorischen Positionierantrieb aufweisen, wobei die Zylinderräume der als Antriebsmotoren der motorischen Positionierantriebe der Halteeinheiten vorgesehenen Kolben-Zylinder-Einheiten vorzugsweise über jeweils ein schaltbares Vorsteuerventil auf die gemeinsame Antriebsdruckquelle aufschaltbar sind.

In der vorgesetzten Position ist das Halteelement einer Halteeinheit in den Funktionsbereitschaftszustand überführt und kann folglich durch Aufschalten der Quelle für das Funktionsmedium in die Lage versetzt werden, ein Werkstück zu fixieren. In der zurückgesetzten Position kann das in den Außerfunktionszustand geschaltete Halteelement ein zuvor gehaltenes Werkstück freigeben.

Zur Sicherung des Halteelements in der vorgesetzten Position und somit in einem zur Fixierung eines Werkstücks grundsätzlich geeigneten Zustand ist das in die vorgesetzte Position zugestellte Halteelement gegen eine Zustellung in Richtung auf die zurückgesetzte Position arretierbar.

Zur Arretierung des Halteelements in der vorgesetzten Position ist erfindungsgemäß eine Verriegelungsvorrichtung vorgesehen, die mit einem Sperrdruck arbeitet. Der Sperrdruck wird dabei mittels einer auch anderweitig genutzten Druckquelle erzeugt. Im Einzelnen ist in dem Zylinderraum der als Antriebsmotor des motorischen Positionierantriebs einer Halteeinheit vorgesehenen Kolben-Zylinder-Einheit mittels der auf den Zylinderraum aufgeschalteten Antriebsdruckquelle ein Sperrdruck erzeugbar, welcher das in die vorgesetzte Position zugestellte Halteelement beziehungsweise den die Zustellbewegung des Halteelements bewirkenden und als Stößel vorgesehenen Kolben gegen eine Rückstellbewegung blockiert.

Zur Aufrechterhaltung des Sperrdrucks in dem Zylinderraum der als Antriebsmotor vorgesehenen Kolben-Zylinder-Einheit bedarf es erfindungsgemäß eines fortgesetzten Betriebs der zur Erzeugung des Sperrdrucks verwendeten Antriebsdruckquelle. Zu einem Zeitpunkt, zu dem sich der Kolben der Kolben-Zylinder-Einheit in einer der zurückgesetzten Position des Halteelements zugeordneten Position befindet, wird die Antriebsdruckquelle über ein in einen durchlässigen Zustand geschaltetes Absperrventil nur so lange auf den Zylinderraum der Kolben-Zylinder-Einheit aufgeschaltet, bis die Antriebs-Schaltbewegung des Kolbens eingeleitet ist. Nach der Einleitung der Antriebs-Schaltbewegung des Kolbens schaltet das Absperrventil in den sperrenden Zustand. Ab diesem Zeitpunkt wird dem Zylinderraum der Kolben-Zylinder-Einheit das zur Fortsetzung der Antriebs-Schaltbewegung des Kolbens und zum Aufbau eines Sperrdrucks in dem Zylinderraum benötigte Druckmedium an dem in den sperrenden Zustand geschalteten Absperrventil vorbei zugeführt. Vorzugsweise ist eine über eine entsprechende Bypassleitung hergestellte Verbindung zwischen der das Druckmedium bereitstellenden Antriebsdruckquelle und dem Zylinderraum der Kolben-Zylinder-Einheit bei durchlässigem Zustand des Absperrventils noch gesperrt.

Zum Sperren der über die Bypassleitung hergestellten Verbindung zwischen der Antriebsdruckquelle und dem Zylinderraum der Kolben-Zylinder-Einheit ist in bevorzugter Ausgestaltung der Erfindung der in eine der zurückgesetzten Position des Halteelements zugeordnete Position bewegte Kolben der Kolben-Zylinder-Einheit vorgesehen, der eine Mündung der Bypassleitung in den Zylinderraum der Kolben-Zylinder-Einheit abdeckt. Aufgrund der Einleitung der Antriebs-Schaltbewegung des Kolbens mittels des in den durchlässigen Zustand geschalteten Absperrventils wird die zylinderraumseitige Mündung der Bypassleitung frei und das von der Antriebsdruckquelle bereitgestellte Druckmedium kann durch die nunmehr offene Bypassleitung in den Zylinderraum der Kolben-Zylinder-Einheit einströmen und dadurch bei in den sperrenden Zustand geschaltetem Absperrventil die zuvor eingeleitete Antriebs-Schaltbewegung des Kolbens der Kolben-Zylinder-Einheit und die damit verbundene Zustellung des Halteelements aus der zurückgesetzten Position in die vorgesetzte Position vollenden und in dem Zylinderraum der Kolben-Zylinder-Einheit den Sperrdruck erzeugen, aufgrund dessen der Kolben der Kolben-Zylinder-Einheit und das in den vorgesetzten Zustand zugestellte Halteelement gegen eine Rückstellung arretiert sind.

Vorteilhafterweise muss das zwischen der Antriebsdruckquelle und dem Zylinderraum der Kolben-Zylinder-Einheit vorgesehene Absperrventil nur für einen kurzen Zeitraum in einem durchlässigen Zustand gehalten werden. Bei elektrisch in den durchlässigen Zustand geschalteten Absperrventilen muss folglich ein Aktorstrom nur kurzzeitig fließen. Eine mit dem Stromfluss verbundene Erwärmung beispielsweise des Absperrventils wird auf diese Weise minimiert. Schaltet das elektrisch in den durchlässigen Zustand geschaltete Absperrventil selbsttätig in den sperrenden Zustand, so kann auch bei einem Stromausfall nach der Einleitung der Antriebs-Schaltbewegung ohne Weiteres die Antriebs-Schaltbewegung des Kolbens und die damit verbundene Zustellung des Halteelements in die vorgesetzte Position fortgesetzt und ein Sperrdruck in dem Zylinderraum der Kolben-Zylinder-Einheit aufgebaut und zur Arretierung des Halteelements in der vorgesetzten Position funktionssicher aufrechterhalten werden.

Eine entsprechend ausgeführte Halteeinheit bietet sich insbesondere für erfindungsgemäße Werkstück-Haltevorrichtungen an, im Falle derer die Halteeinheit und wenigstens eine weitere baugleiche Halteeinheit mittels einer gemeinsamen Antriebsdruckquelle betrieben werden und die gemeinsame Antriebsdruckquelle über als Absperrventile vorgesehene Vorschaltventile auf die Zylinderräume der Kolben-Zylinder-Einheiten der Halteeinheiten aufschaltbar ist.

Weitere besondere Ausführungsarten der Werkstück-Haltevorrichtung gemäß Patentanspruch 1, der Werkstück-Handlingvorrichtung gemäß Patentanspruch 14 und der maschinellen Anordnung gemäß Patentanspruch 15 ergeben sich aus den abhängigen Patentansprüchen 2 bis 13.

Eine Werkstück-Haltevorrichtung mit mehreren jeweils einen Druckmittelantrieb als Positionierantrieb aufweisenden Halteeinheiten, ist in Weiterbildung der Erfindung dadurch gekennzeichnet, dass eine einzelne Antriebsdruckquelle die Positionierantriebe sämtlicher Halteeinheiten mit einem zur Betätigung des schaltenden Antriebselements benötigten strömungsfähigen Antriebsdruckmedium versorgt (Patentanspruch 2). Dabei besteht die Möglichkeit, dass zwischen der gemeinsamen Antriebsdruckquelle und den Antriebsmotoren der motorischen Positionierantriebe der Halteeinheiten jeweils ein schaltbares Vorsteuerventil vorgesehen ist.

Gemäß Patentanspruch 3 zeichnet sich eine weitere Bauart der erfindungsgemäßen Werkstück-Haltevorrichtung dadurch aus, dass das Halteelement wenigstens einer Halteeinheit der Werkstück-Haltevorrichtung motorisch nicht nur aus der zurückgesetzten Position in die vorgesetzte Position zugestellt sondern auch in Gegenrichtung rückgestellt werden kann. Zu diesem Zweck vorgesehen ist ein motorischer Rückstellantrieb, der ein schaltendes Rückstellelement antreibt, das seinerseits auch ein Schaltelement der Schaltvorrichtung für das Halteelement ausbildet. Aufgrund einer von dem motorischen Rückstellantrieb erzeugten Rückstellbewegung des Halteelements wird das Halteelement außerdem aus dem Funktionsbereitschaftszustand in den Außerfunktionszustand geschaltet.

In weiterer bevorzugter Ausgestaltung der Erfindung ist ein und dasselbe Bauteil als schaltendes Antriebselement des motorischen Positionierantriebs und als schaltendes Rückstellelement des motorischen Rückstellantriebs für das Halteelement vorgesehen (Patentanspruch 4).

Im Falle der Erfindungsbauart gemäß Patentanspruch 5 wird der motorische Positionierantrieb bei der Zustellung des Halteelements aus der zurückgesetzten Position in die vorgesetzte Position genutzt, um den Rückstellantrieb für das Halteelement in einen Rückstell-Bereitschaftszustand zu überführen. Ein im Rückstell-Bereitschaftszustand befindlicher Rückstellmotor des Rückstellantriebs ist zum Einleiten der Rückstellbewegung des Halteelements aus der vorgesetzten Position in die zurückgesetzte Position lediglich entsprechend anzusteuern.

Als in einen Rückstell-Bereitschaftszustand überführbarer Rückstellmotor ist in weiterer bevorzugter Ausgestaltung der Erfindung ein Federmotor mit einer Rückstellfeder vorgesehen. Durch die mittels des motorischen Positionierantriebs erzeugte Zustellung des Halteelements aus der zurückgesetzten Position in die vorgesetzte Position wird die Rückstellfeder des Federmotors vorgespannt und dadurch in die Lage versetzt, die Rückstellung des Halteelements vorzunehmen (Patentanspruch 6). Als Rückstellfeder kommt erfindungsgemäß eine Zugfeder ebenso in Frage wie eine Druckfeder. Ist - wie im Falle der Erfindung - als schaltendes Antriebs- und Rückstellelement ein in einem Führungsgehäuse beweglich geführter Stößel vorgesehen, so wird die Rückstellfeder des Rückstellantriebs vorzugsweise einerseits an dem Stößel und andererseits an dem Führungsgehäuse befestigt.

Zweckmäßigerweise wird in weiterer Ausgestaltung der Erfindung das in die vorgesetzte Position zugestellte Halteelement durch den im Rückstell-Bereitschaftszustand befindlichen Rückstellmotor nicht unmittelbar sondern über das schaltende Rückstellelement in Richtung auf die zurückgesetzte Position beaufschlagt (Patentanspruch 7).

Im Falle der Erfindung wird als schaltendes Rückstellelement der als schaltendes Antriebselement vorgesehene und in einem Zylinderraum eines Führungsgehäuses geführte Stößel verwendet. Der Rückstellmotor des Rückstellantriebs beaufschlagt den in eine der zurückgesetzten Position des Halteelements zugeordnete Position bewegten Stößel in Richtung auf eine mit einem Einlass für das strömungsfähige Antriebsdruckmedium versehene Wand des Zylinderraums. Erfindungsgemäß ist daher ein Abstandhalter vorgesehen, welcher den Stößel auf Abstand von dem Einlass für das strömungsfähige Antriebsdruckmedium hält (Patentanspruch 8). Auf diese Art und Weise ist sichergestellt, dass der Stößel bei einer sich an die Rückstellung des Halteelements anschließenden Zustellung des Halteelements aus der zurückgesetzten Position in die vorgesetzte Position an seiner dem Einlass für das strömungsfähige Antriebsdruckmedium gegenüberliegenden Seite großflächig durch das strömungsfähige Antriebsdruckmedium beaufschlagt werden kann.

Insbesondere kann der Abstandhalter an dem als Stößel vorgesehenen Kolben der als Antriebsmotor der betreffenden Halteeinheit dienenden Kolben-Zylinder-Einheit angebracht sein und in einer der zurückgesetzten Position des Halteelements zugeordneten Position die Mündung einer zwischen der Antriebsdruckquelle und dem Zylinderraum der Kolben-Zylinder-Einheit an dem Absperrventil vorbei verlaufenden Bypassleitung abdecken, bis mittels des in den durchlässigen Zustand geschalteten Absperrventils über eine zusätzlich zu der Bypassleitung in den Zylinderraum der Kolben-Zylinder-Einheit mündende Verbindung zwischen der Antriebsdruckquelle und dem Zylinderraum die Antriebs-Schaltbewegung des Kolbens eingeleitet worden ist.

Zur Freigabe des in den Rückstell-Bereitschaftszustand überführten Rückstellmotors des Rückstellantriebs für die Erzeugung einer Rückstellung des Halteelements aus der vorgesetzten Position in die zurückgesetzte Position ist im Falle der Erfindungsbauart gemäß Patentanspruch 9 die Arretierung, mittels derer das Halteelement in der vorgesetzten Position arretierbar ist, zu lösen. Zum Lösen der Arretierung wird der Sperrdruck, der in dem Zylinderraum der als Antriebsmotor vorgesehenen Kolben-Zylinder-Einheit ansteht, abgebaut.

Die Patentansprüche 10 und 11 betreffen besonders praxisrelevante Bauarten der erfindungsgemäßen Werkstück-Haltevorrichtung. In beiden Fällen ist als Halteelement wenigstens einer der Halteeinheiten ein Sauger mit einem werkstückseitig mündenden Funktionsraum vorgesehen, der über eine Anschlussleitung auf eine Unterdruckquelle aufgeschaltet werden kann. Das schaltende Antriebselement des motorischen Positionierantriebs und/oder das schaltende Rückstellelement des motorischen Rückstellantriebs ist beziehungsweise sind wahlweise in eine Freigabestellung oder in eine Sperrstellung bewegbar. Die Verbindungsleitung zwischen dem Funktionsraum des Saugers und der Unterdruckquelle ist bei Freigabestellung des schaltenden Antriebselements und/oder des schaltenden Rückstellelements offen, bei Sperrstellung des schaltenden Antriebselements und/oder des schaltenden Rückstellelements gesperrt.

Ausweislich der Patentansprüche 12 und 13 verlaufen Abschnitte der Anschlussleitung zwischen dem Funktionsraum des Saugers und der Unterdruckquelle durch das schaltende Antriebselement und/oder durch das schaltende Rückstellelement, ergänzend oder alternativ durch das Führungsgehäuse, in welchem ein als schaltendes Antriebselement und/oder als schaltendes Rückstellelement vorgesehener Stößel beweglich geführt ist.

Nachfolgend wird die Erfindung anhand beispielhafter schematischer Darstellungen näher erläutert.

Es zeigen:
- Figuren 1a, 1b: eine Werkstück-Handlingvorrichtung mit zwei Saugerplatten als Werkstück-Haltevorrichtungen,
- Figuren 2a, 2b: eine Saugereinheit der Saugerplatten gemäß den Figuren 1a, 1b.

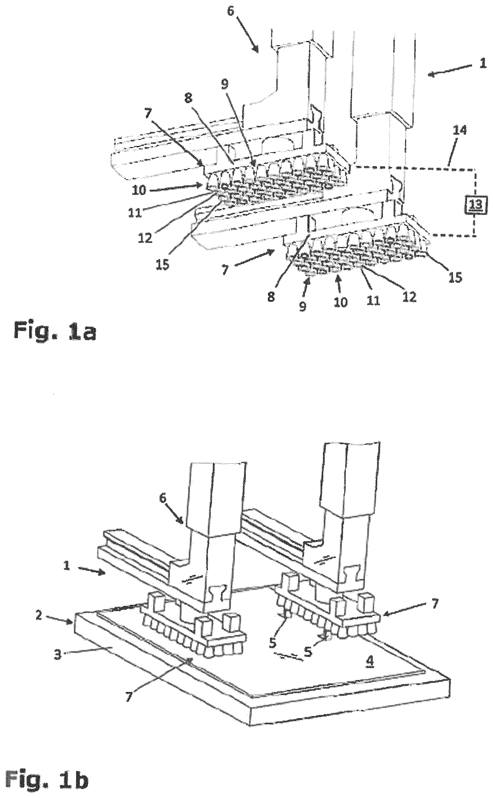

Eine in den Figuren 1a, 1b gezeigte Werkstück-Handlingvorrichtung 1 (nachstehend kurz "Handlingvorrichtung 1") ist zur Automatisierung einer Bearbeitungsvorrichtung in Form einer Werkzeugmaschine 2 vorgesehen. Von der Werkzeugmaschine 2 ist in Figur 1b eine Werkstückauflage 3 gezeigt. Gemeinsam mit der Handlingvorrichtung 1 bildet die Werkzeugmaschine 2 eine maschinelle Anordnung zum Bearbeiten von Blechen 4.

Die Werkzeugmaschine 2 ist herkömmlicher Bauart und umfasst eine nicht dargestellte Laserschneidstation sowie eine der Laserschneidstation nachgeschaltete und gleichfalls herkömmliche Umformstation. An der Ausschleusseite der Umformstation der Werkzeugmaschine 2 befindet sich die Werkstückauflage 3. Anstelle der Laserschneidstation ist auch eine Stanzstation oder eine kombinierte Stanz-/Laserschneidstation denkbar.

Gemäß Figur 1b ist das auf der Werkstückauflage 3 gelagerte Blech 4 mit Aufkantungen 5 versehen. Zur Herstellung der Aufkantungen 5 wurden an der Laserschneidstation der Werkzeugmaschine 2 Bereiche des Blechs 4 unter Stehenlassen einer Restverbindung mit dem Blech 4 an drei senkrecht zueinander verlaufenden Kanten freigeschnitten. Um die Restverbindung wurden die teilweise freigeschnittenen Blechbereiche anschließend an der Umformstation der Werkzeugmaschine 2 aufgebogen.

Mittels der Handlingvorrichtung 1 soll das bearbeitete Blech 4 von der Werkstückauflage 3 abgeführt werden. Zusätzlich wird die Handlingvorrichtung 1 genutzt, um der Werkzeugmaschine 2 zu bearbeitende Bleche 4 zuzuführen.

Die Handlingvorrichtung 1 weist einen mittels eines motorischen Handlingantriebs in den drei Achsrichtungen des Raumes bewegbaren Rahmen 6 auf, an dessen Unterseite als Werkstück-Haltevorrichtungen zwei baugleiche Saugerplatten 7 montiert sind. Die Saugerplatten 7 umfassen jeweils als Tragstruktur eine Grundplatte 8, an der eine Mehrzahl von als Saugereinheiten 9 ausgebildeten Halteeinheiten vorgesehen sind.

Jede der Saugereinheiten 9 weist als Halteelement einen Sauger 10 auf, der wie üblich mit einer elastisch verformbaren Saugermanschette 11 versehen ist, die ihrerseits einen werkstückseitig mündenden Funktionsraum 12 des Saugers 10 umschließt.

Die Funktionsräume 12 sämtlicher Sauger 10 der beiden Saugerplatten 7 sind an eine als Quelle für ein Funktionsmedium vorgesehene gemeinsame Unterdruckquelle in Form eines in Figur 1a stark schematisch dargestellten Ejektors 13 herkömmlicher Bauart angeschlossen. Eine als Verbindung zwischen dem Ejektor 13 und den Funktionsräumen 12 der einzelnen Sauger 10 vorgesehene Anschlussleitung 14 ist in Figur 1a gestrichelt angedeutet.

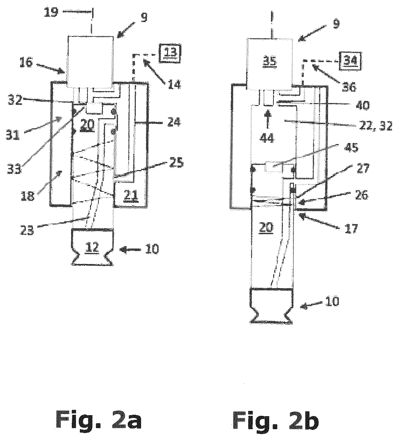

Damit das bearbeitete Blech 4 ungeachtet der an dem Blech 4 erstellten Aufkantungen 5 mittels der Handlingvorrichtung 1 gehandhabt werden kann, sind an den Saugerplatten 7 der Handlingvorrichtung 1 besondere konstruktive Vorkehrungen getroffen, die nachstehend zu den Figuren 2a, 2b im Detail beschrieben werden.

Im Einzelnen sind die Saugereinheiten 9 der Saugerplatten 7 derart ausgebildet, dass die Sauger 10 der Saugerplatten 7 unabhängig voneinander senkrecht zu der jeweiligen Grundplatte 8 zugestellt werden können. Gegenüber der Grundplatte 8 einer Saugerplatte 7 kann jeder der daran vorgesehenen Sauger 10 wahlweise in eine grundplattennahe und somit gegenüber dem zu handhabenden Blech 4 zurückgesetzte Position oder in eine grundplattenferne und folglich zu dem zu handhabenden Blech 4 hin vorgesetzte Position bewegt werden. Auf diese Art und Weise lassen sich die Saugerplatten 7 der Handlingvorrichtung 1 für ihren Einsatz an die Oberflächenkontur des zu handhabenden Blechs 4 anpassen.

In Figur 1b sind sämtliche an der Unterseite der Grundplatten 8 der Saugerplatten 7 angeordneten Sauger 10 noch von der Oberseite des von der Werkstückauflage 3 abzuführenden Blechs 4 und den daran vorgesehenen Aufkantungen 5 beabstandet. Sämtliche Sauger 10 befinden sich in der (gegenüber dem zu handhabenden Blech 4) zurückgesetzten Position. Stirnflächen 15 der Sauger 10 liegen in einer allen Stirnflächen 15 gemeinsamen blechparallelen Ebene.

Zum Konfigurieren der Saugerplatten 7 in Abhängigkeit von der Oberflächenkontur des Blechs 4 werden ausgehend von den Verhältnissen gemäß Figur 1b diejenigen Sauger 10, die nicht oberhalb der Aufkantungen 5 des Blechs 4 liegen, ausgehend von der zurückgesetzten Position gemäß Figur 1b in die (zu dem zu handhabenden Blech 4 hin) vorgesetzte Position zugestellt. Auf diese Weise zugestellt werden dementsprechend sämtliche Sauger 10 an der in Figur 1b linken Saugerplatte 7 sowie diejenigen Sauger 10 an der in Figur 1b rechten Saugerplatte 7, die nicht oberhalb der Aufkantungen 5 des Blechs 4 angeordnet sind.

Der Abstand, den die Saugerplatten 7 beziehungsweise deren Grundplatten 8 in Figur 1b von der Oberseite des Blechs 4 aufweisen und der Betrag des Zustellhubs, mit welchem die Sauger 10 aus der zurückgesetzten Position in die vorgesetzte Position zugestellt werden, sind derart aufeinander abgestimmt, dass die dem ebenen Teil des Blechs 4 zugeordneten Sauger 10 aufgrund der Zustellung aus der zurückgesetzten Position in die vorgesetzte Position mit ihren Saugermanschetten 11 auf dem ebenen Bereich des Blechs 4 aufsetzen. Infolgedessen sind die bei zurückgesetzter Position der Sauger 10 werkstückseitig offenen Funktionsräume 12 an den vorgesetzten Saugern 10 werkstückseitig durch das Blech 4 verschlossen.

Die oberhalb der Aufkantungen 5 angeordneten Sauger 10 an der rechten Saugerplatte 7 werden in der zurückgesetzten Position belassen, in welcher die Stirnflächen 15 der zurückgesetzten Sauger 10 von den Aufkantungen 5 an dem Blech 4 senkrecht zu der Hauptebene des Blechs 4 geringfügig beabstandet sind. Nachdem die dem ebenen Bereich des Blechs 4 zugeordneten Sauger 10 in die vorgesetzte Position zugestellt sind, bilden die Stirnflächen 15 der Sauger 10 an der rechten Saugerplatte 7 folglich eine an die Oberflächenkontur des mit den Aufkantungen 5 versehenen Blechs 4 angepasste unebene Haltekontur aus.

Der Ejektor 13 kann bereits bei zurückgesetzter Position sämtlicher Sauger 10 eingeschaltet sein oder aber unmittelbar vor oder erst nach dem Aufsetzen der betreffenden Sauger 10 auf dem ebenen Teil des Blechs 4 zugeschaltet werden. Nachstehend im Einzelnen beschriebene konstruktive Maßnahmen an den Saugereinheiten 9 der Saugerplatten 7 sorgen dafür, dass die Anschlussleitung 14 zwischen dem Ejektor 13 und den Funktionsräumen 12 der Sauger 10 bei zurückgesetzter Position der Sauger 10 gesperrt ist und die Sauger 10 damit in den Außerfunktionszustand geschaltet sind und dass die Anschlussleitung 14 zwischen dem Ejektor 13 und den Funktionsräumen 12 der in die vorgesetzte Position zugestellten Sauger 10 offen ist und die Sauger 10 damit in den Funktionsbereitschaftszustand geschaltet sind. Befinden sich die Sauger 10 in dem Funktionsbereitschaftszustand wird ein von dem Ejektor 13 als Funktionsmedium erzeugter Unterdruck an die Funktionsräume 12 der Sauger angelegt und die vorgesetzten Sauger 10 befinden sich damit in einem Funktionszustand.

Aufgrund des durch den Ejektor 13 erzeugten Unterdrucks in den Funktionsräumen 12 der vorgesetzten Sauger 10 üben diese auf das Blech 4 die Haltekraft aus, die erforderlich ist, um das Blech 4 an den Saugerplatten 7 und somit an der Handlingvorrichtung 1 zu fixieren.

Nach dem Ansaugen des Blechs 4 an den vorgesetzten Saugern 10 der Saugerplatten 7 wird die Handlingvorrichtung 1 gemeinsam mit dem Blech 4 gegenüber der Werkstückauflage 3 angehoben, ehe die Handlingvorrichtung 1 mit dem Blech 4 zu einem nicht dargestellten Ablageort verfährt.

Hat die Handlingvorrichtung 1 den Ablageort erreicht, wird der Ejektor 13 stillgesetzt und die Anschlussleitung 14 zwischen dem Ejektor 13 und den Funktionsräumen 12 der vorgesetzten Sauger 10 wird zur Aufhebung des bislang an den Funktionsräumen 12 der vorgesetzten Sauger 10 anliegenden Unterdrucks belüftet. Zusätzlich können die Funktionsräume 12 der vorgesetzten Sauger 10 zum Abblasen mittels eines an dem Injektor 13 vorgesehenen Kompressors über die Anschlussleitung 14 mit Druckluft beaufschlagt werden. Durch das Abblasen an den Saugern 10 wird die ansonsten ausschließlich unter Schwerkraftwirkung erfolgende Trennung des Blechs 4 von den vorgesetzten Saugern 10 der Saugerplatten 7 unterstützt.

In den Figuren 2a, 2b ist für die Saugereinheit 9 eine Bauart dargestellt, mittels derer sich die vorstehenden Abläufe beim Handling des mit den Aufkantungen 5 versehenen Blechs 4 realisieren lassen.

Die dargestellte Bauart der Saugereinheit 9 weist einen gesteuert betätigbaren motorischen Positionierantrieb 16, einen gesteuert betätigbaren motorischen Rückstellantrieb 17 sowie eine gesteuert betätigbare Schaltvorrichtung 18 auf.

Mittels des Positionierantriebs 16 kann der Sauger 10 der Saugereinheit 9 relativ zu der Grundplatte 8 der betreffenden Saugerplatte 7 längs einer in dem dargestellten Beispielsfall linearen Zustellbahn aus der zurückgesetzten Position in die vorgesetzte Position zugestellt werden. Der Rückstellantrieb 17 ist vorgesehen, um den Sauger 10 der Saugereinheit 9 relativ zu der Grundplatte 8 der betreffenden Saugerplatte 7 längs einer in dem dargestellten Beispielsfall gleichfalls linearen Rückstellbahn aus der vorgesetzten Position in die zurückgesetzte Position rückzustellen. Der Verlauf der linearen Zustellbahn und der damit identische Verlauf der linearen Rückstellbahn des Saugers 10 sind in den Figuren 2a, 2b durch eine strichpunktierte Stellachse 19 veranschaulicht. Mittels der Schaltvorrichtung 18 wird der Sauger 10 in einen Funktionsbereitschaftszustand oder in einen Außerfunktionszustand überführt.

Außerdem verfügt die dargestellte Bauart der Saugereinheit 9 über einen Stößel in Form eines Hubstößels 20, an welchem der Sauger 10 befestigt ist und über ein Führungsgehäuse 21, an welchem die Saugereinheit 9 mit der Grundplatte 8 der betreffenden Saugerplatte 7 verbunden ist und das in seinem Innern einen Führungsraum 22 für den Hubstößel 20 aufweist. Der Hubstößel 20 bildet jeweils sowohl ein schaltendes Antriebselement des Positionierantriebs 16 als auch ein schaltendes Rückstellelement des Rückstellantriebs 17 und ein Schaltelement der Schaltvorrichtung 18. Bewegungen des Hubstößels 20 relativ zu dem Führungsgehäuse 21 sind aufgrund der Fixierung des Führungsgehäuses 21 an der Grundplatte 8 der betreffenden Saugerplatte 7 auch Bewegungen relativ zu der Grundplatte 8.

Als Teil des Positionierantriebs 16 ist der Hubstößel 20 infolge einer Betätigung des Positionierantriebs 16 mit einer Antriebsbewegung antreibbar, aufgrund derer der Stößel 20 den Sauger 10 längs dessen Zustellbahn aus der zurückgesetzten Position in die vorgesetzte Position zustellt. In seiner Eigenschaft als Teil des Rückstellantriebs 17 bewegt der Hubstößel 20 bei Betätigung des Rückstellantriebs 17 den Sauger 10 längs dessen Rückstellbahn aus der vorgesetzten Position in die zurückgesetzte Position. Als Schaltelement der Schaltvorrichtung 18 schaltet der Hubstößel 20 den Sauger 10 bei der Bewegung des Saugers 10 aus der zurückgesetzten Position in die vorgesetzte Position aus dem Außerfunktionszustand in den Funktionsbereitschaftszustand und bei der Bewegung des Saugers 10 aus der vorgesetzten Position in die zurückgesetzte Position aus dem Funktionsbereitschaftszustand in den Außerfunktionszustand. Bei den von dem Hubstö-βel 20 ausgeführten Bewegungen handelt es sich dementsprechend um Antriebs-Schaltbewegungen.

Im Falle der dargestellten Bauart der Saugereinheit 9 ist der Hubstößel 20 in seinem Innern mit einem saugerseitigen Abschnitt 23 der zu dem Ejektor 13 führenden Anschlussleitung 14 versehen, wobei der saugerseitige Abschnitt 23 der Anschlussleitung 14 einerseits in den Funktionsraum 12 des an dem Hubstößel 20 befestigten Saugers 10 und andererseits zu dem Führungsgehäuse 21 hin mündet. Durch das Führungsgehäuse 21 verläuft ein gehäuseseitiger Abschnitt 24 der Anschlussleitung 14 mit einer Mündung 25 an der Wand des Führungsraums 22.

Der Rückstellantrieb 17 der dargestellten Bauart der Saugereinheit 9 ist als Federantrieb ausgeführt mit einem gesteuert betätigbaren Federmotor 26 als Rückstellmotor. Der Federmotor 26 weist eine als Druckfeder ausgebildete Rückstellfeder 27 auf, die einerseits über den Hubstößel 20 an dem Sauger 10 und andererseits mittelbar oder unmittelbar an dem Führungsgehäuse 21 gelagert ist.

Die Rückstellfeder 27 wird aufgrund der Zustellung des Saugers 10 aus der zurückgesetzten Position in die vorgesetzte Position und der damit einhergehenden Bewegung des Hubstößels 20 vorgespannt und der Federmotor 26 wird dadurch in einen Rückstell-Bereitschaftszustand überführt. Bei Rückstellbereitschaftszustand des Federmotors 26 bedarf es lediglich einer entsprechenden Ansteuerung des Federmotors 26, damit der Federmotor 26 den Sauger 10 mittels des Hubstößels 20 aus der vorgesetzten Position in die zurückgesetzte Position bewegt.

Bei dem Positionierantrieb 16 der Saugereinheit 9 gemäß den Figuren 2a, 2b handelt es sich um einen mittels eines strömungsfähigen Antriebsdruckmediums betriebenen, vorliegend pneumatischen, Positionierantrieb.

Die in den Figuren 2a, 2b dargestellte Saugereinheit 9 weist einen Positionierantrieb 16 mit einem als Kolben-Zylinder-Einheit 31 ausgebildeten Antriebsmotor auf. Als Kolben der Kolben-Zylinder-Einheit 31 ist dabei der Hubstößel 20 vorgesehen. Den Zylinder der Kolben-Zylinder-Einheit 31 bildet das Führungsgehäuse 21. Der Führungsraum 22 des Führungsgehäuses 21 bildet einen Zylinderraum 32 aus, der saugerseitig von einer als Kolbenfläche 33 vorgesehenen Fläche des Hubstößels 20 begrenzt wird.

Zur Betätigung des Positionierantriebs 16 wird auf den Zylinderraum 32 der Kolben-Zylinder-Einheit 31 eine das strömungsfähige Antriebsdruckmedium erzeugende Antriebsdruckquelle, vorliegend ein Kompressor 34, aufgeschaltet.

Der Kompressor 34 erzeugt als gemeinsame Antriebsdruckquelle das Antriebsdruckmedium für sämtliche Saugereinheiten 9 der beiden Saugerplatten 7. Um die Zylinderräume 32 der einzelnen Saugereinheiten 9 der Saugerplatten 7 unabhängig voneinander auf den Kompressor 34 aufschalten zu können, ist in der Verbindungsleitung zwischen dem Kompressor 34 und jedem der Zylinderräume 32 ein gesteuert schaltbares Absperrventil in Form eines Vorsteuerventils 35 vorgesehen.

Befindet sich der Sauger 10 in der zurückgesetzten Position und ist der Zylinderraum 32 der betreffenden Saugereinheit 9 auf den eingeschalteten Kompressor 34 aufgeschaltet, so baut sich in dem Zylinderraum 32 der Saugereinheit 9 der von dem Kompressor 34 erzeugte Antriebsdruck auf. Indem der Antriebsdruck die Kolbenfläche 33 des Hubstößels 20 beaufschlagt, bewirkt der Antriebsdruck eine Verlagerung des Hubstößels 20 längs der Stellachse 19 und damit einhergehend eine Zustellung des an dem Hubstößel 20 angebrachten Saugers 10 aus der zurückgesetzten Position in die vorgesetzte Position.

An der Saugereinheit 9 gemäß den Figuren 2a, 2b wird das Vorsteuerventil 35 nur so lange durchlässig geschaltet, bis sich der Hubstößel 20 ausgehend von seiner der zurückgesetzten Position des Saugers 10 zugeordneten Ausgangsposition zur Zustellung des Saugers 10 in die vorgesetzte Position in Bewegung gesetzt hat. Nach der Einleitung der Bewegung des Hubstößels 20 schaltet das Vorsteuerventil 35 in den sperrenden Zustand. Ab diesem Zeitpunkt wird dem Zylinderraum 32 das zur Fortsetzung der Bewegung des Hubstößels 20 benötigte und von dem Kompressor 34 bereitgestellte Druckmedium an dem in den sperrenden Zustand geschalteten Vorsteuerventil 35 vorbei über eine Bypassleitung 40 zugeführt.

Die über die Bypassleitung 40 hergestellte Verbindung zwischen dem eingeschalteten Kompressor 34 und dem Zylinderraum 32 ist bei Ausgangsposition des Hubstößels 20 und bei in den Sperrzustand geschaltetem Vorsteuerventil 35 noch gesperrt, da der Hubstößel 20 zu diesem Zeitpunkt die Mündung der Bypassleitung 40 in den Zylinderraum 32 verschließt. Über den Querschnitt der Bypassleitung 40 liegt an der Kolbenfläche 33 des Hubstößels 20 bei zurückgesetzter Position des Saugers 10 zwar der von dem Kompressor 34 erzeugte Antriebsdruck bereits an, infolge der geringen Größe der über die Bypassleitung 40 druckbeaufschlagten Teilfläche der Kolbenfläche 33 ist die aufgrund des Antriebsdrucks an der Querschnittsfläche der Bypassleitung 40 auf den Hubstößel 20 wirkende Kraft aber nicht groß genug, um über den Hubstößel 20 den Sauger 10 gegen die Wirkung der Rückstellfeder 27 aus der Ausgangsposition in Richtung auf die vorgesetzte Position zu bewegen.

Eine konstruktive Besonderheit weist die Saugereinheit 9 gemäß den Figuren 2a, 2b auch insoweit auf, als im Falle dieser Bauart der Saugereinheit 9 der Hubstö-βel 20 bei zurückgesetztem Sauger 10 nicht durch die Rückstellfeder 27 des Rückstellantriebs 17 auf Abstand von demjenigen Bereich der Wand des Zylinderraums 32 gehalten wird, welcher der an dem Hubstößel 20 ausgebildeten Kolbenfläche 33 gegenüberliegt. Der genannte Wandbereich des Zylinderraums 32 ist mit einem Einlass 44 für das von dem Kompressor 34 erzeugte Antriebsdruckmedium versehen. Der Einlass 44 wird von der Mündung der Bypassleitung 40 und der benachbarten Mündung der zu dem Vorsteuerventil 35 führenden Druckmittelleitung gebildet.

Wäre die Kolbenfläche 33 an dem Hubstößel 20 eben, so würde die Kolbenfläche 33 unter der Wirkung der den Hubstößel 20 bei zurückgesetzter Position des Saugers 10 beaufschlagenden Rückstellfeder 27 den Einlass 44 an der Wand des Zylinderraums 32 dicht aufliegend verschließen. Der zum Zustellen des Saugers 10 aus der zurückgesetzten Position in die vorgesetzte Position an den Hubstößel 20 angelegte Antriebsdruck würde folglich nur über die kleine Querschnittsfläche des Einlasses 44 auf den Hubstößel 20 wirken und auch nur eine entsprechend kleine Kraft auf den Hubstößel 20 ausüben. Die auf den Hubstößel 20 ausgeübte Kraft wäre nicht ausreichend, um die von dem Hubstößel 20 zum Zustellen des Saugers 10 aus der zurückgesetzten Position in die vorgesetzte Position auszuführende Bewegung gegen die Wirkung der vorgespannten Rückstellfeder 27 einzuleiten.

Damit ungeachtet der im Falle der Saugereinheit 9 gemäß den Figuren 2a, 2b gewählten Anordnung der Rückstellfeder 27 eine funktionssichere Zustellung des Saugers 10 aus der zurückgesetzten Position in die vorgesetzte Position gewährleistet ist, weist der Hubstößel 20 an der Kolbenfläche 33 einen Abstandhalter 45 auf. Der Abstandhalter 45 sorgt dafür, dass der Hubstößel 20 bei zurückgesetztem Sauger 10 mit dem größten Teil der Kolbenfläche 33 von der Mündung der zu dem Vorsteuerventil 35 führenden Druckmittelleitung beabstandet ist und dass das von dem Kompressor 34 erzeugte Antriebsdruckmedium die Kolbenfläche 33 bei durchlässig geschaltetem Vorsteuerventil 35 folglich derart großflächig beaufschlagen kann, dass die Bewegung des Hubstößels 20 zum Zustellen des Saugers 10 aus der zurückgesetzten Position in die vorgesetzte Position funktionssicher eingeleitet wird.

Mit Umschalten des Vorsteuerventils 35 aus dem Sperrzustand in den durchlässigen Zustand wird dementsprechend eine hinreichend große Teilfläche der Kolbenfläche 33 an dem Hubstößel 20 mit dem von dem Kompressor 34 erzeugten Antriebsdruck beaufschlagt, um die von der Rückstellfeder 27 ausgeübte Gegenkraft zu überwinden und eine Bewegung des Hubstößels 20 und damit die Zustellbewegung des Saugers 10 in Richtung auf die vorgesetzte Position einzuleiten. Mit Einsetzen der Bewegung des Hubstößels 20 hebt dessen Kolbenfläche 33 von der zuvor beaufschlagten Wand des Zylinderraums 32 ab und die Mündung der Bypassleitung 40 in den Zylinderraum 32 wird geöffnet. Nun kann das über die Bypassleitung 40 in den Zylinderraum 32 einströmende Druckmedium die gesamte Kolbenfläche 33 an dem Hubstößel 20 beaufschlagen und den Hubstößel 20 in die Position zustellen, welche der vorgesetzten Position des Saugers 10 zugeordnet ist.

Unmittelbar mit Einsetzen der Bewegung des Hubstößels 20 wird das Vorsteuerventil 35 aus dem durchlässigen Zustand in den sperrenden Zustand geschaltet.

An der Saugereinheit 9 gemäß den Figuren 2a, 2b muss dementsprechend das zwischen dem Kompressor 34 und dem Zylinderraum 32 vorgesehene Vorsteuerventil 35 nur impulsartig, das heißt nur für einen kurzen Zeitraum, in einen durchlässigen Zustand überführt sein. Bei elektrisch in den durchlässigen Zustand geschalteten Vorsteuerventilen 35 ist folglich der Zeitraum, während dessen ein Aktorstrom fließt, minimiert.

Im Falle der in den Figuren 2a, 2b dargestellten Bauart der Saugereinheit 9 besteht die Möglichkeit, den in die vorgesetzte Position zugestellten Sauger 10 über den Hubstößel 20 gegen eine unter der Wirkung des Rückstellantriebs 17 ausgeführte Rückstellbewegung in Richtung auf die zurückgesetzte Position zu arretieren. Zu diesem Zweck ist eine Arretierungsvorrichtung 36 vorgesehen, die druckgesteuert aktiviert oder deaktiviert wird und die zu diesem Zweck eine Ver-/Entriegelungsdruckquelle aufweist.

Im Falle der Saugereinheit 9 gemäß den Figuren 2a, 2b wird der Hubstößel 20 in einer der vorgesetzten Position des Saugers 10 zugeordneten Position ausschließlich durch einen Sperrdruck arretiert.

Befindet sich der Sauger 10 in der zurückgesetzten Position (Figur 2a), so nimmt der Hubstößel 20 längs der Stellachse 19 eine der zurückgesetzten Position des Saugers 10 zugeordnete Position ein, aufgrund derer die Anschlussleitung 14 zwischen dem Ejektor 13 und dem Funktionsraum 12 des Saugers 10 gesperrt ist. Ist der Funktionsraum 12 des Saugers 10 werkstückseitig offen, wie dies bei dem in Figur 1b dargestellten Betriebszustand der Handlingvorrichtung 1 der Fall ist, so liegt an dem Funktionsraum 12 des Saugers 10 auch bei eingeschaltetem Ejektor 13 kein von dem Ejektor 13 erzeugter Unterdruck an. Der Sauger 10 befindet sich folglich in einem Außerfunktionszustand, in welchem der Sauger 10 nicht in der Lage ist, eine Haltekraft auf das zu handhabende Blech 4 auszuüben.

In der zurückgesetzten Position wird der Sauger 10 durch die an dem Hubstößel 20 angreifende Rückstellfeder 27 gehalten. Der Hubstößel 20 und der daran angebrachte Sauger 10 sind durch die als Rückstellfeder 27 vorgesehene Druckfeder in Schwerkraftrichtung an dem Führungsgehäuse 21 abgestützt.

Wird ausgehend von diesen Verhältnissen der motorische Positionierantrieb 16 einer dem ebenen Bereich des Blechs 4 zugeordneten Saugereinheit 9 betätigt, indem das Vorsteuerventil 35 der betreffenden Saugereinheit 9 durchlässig geschaltet und dadurch der Zylinderraum 32 der Kolben-Zylinder-Einheit 31 mit dem ein Antriebsdruckmedium erzeugenden Kompressor 34 verbunden wird, so bewegt sich der Hubstößel 20 längs der Stellachse 19 aus der Ausgangsposition in eine Position, bei welcher der an dem Hubstößel 20 angebrachte Sauger 10 in die vorgesetzte Position zugestellt ist (Figur 2b).

Mit dieser Bewegung des Hubstößels 20 verbunden ist die Freigabe der Anschlussleitung 14 zwischen dem Ejektor 13 und dem Funktionsraum 12 des Saugers 10 und damit die Überführung des Saugers 10 in den Funktionsbereitschaftszustand. Sitzt der Sauger 10 in der vorgesetzten Position auf dem Blech 4 auf und ist der Funktionsraum 12 des Saugers 10 folglich werkstückseitig durch das Blech 4 verschlossen, so liegt ein von dem Ejektor 13 erzeugter Unterdruck an dem Funktionsraum 12 des Saugers 10 an und der Sauger 10 saugt das Blech 4 unter Ausübung einer Haltekraft an.

Im Falle der dargestellten Bauart der Saugereinheit 9 wird der Sauger 10 zur Sicherung der vorgesetzten Position und damit auch des Funktionsbereitschafts- und des Funktionszustands des Saugers 10 mittels der Verriegelungsvorrichtung 36 in der vorgesetzten Position arretiert, wobei die Arretierung des Saugers 10 jeweils mittelbar über den Hubstößel 20 erfolgt.

Zu diesem Zweck wird bei vorgesetztem Sauger 10 an den Führungsraum 22 beziehungsweise den Zylinderraum 32 im Innern des Führungsgehäuses 21 ein Sperrdruck angelegt. Als Ver-/Entriegelungsdruckquelle zur Erzeugung des Sperrdrucks wird der auch als Antriebsdruckquelle fungierende Kompressor 34 genutzt.

Der Kompressor 34 bleibt eingeschaltet, nachdem der Sauger 10 in die vorgesetzte Position und der Hubstößel 20 in eine entsprechende Position zugestellt sind. Über die Bypassleitung 40 ist dann weiterhin der von dem Kompressor 34 erzeugte Sperrdruck an den Zylinderraum 32 angelegt.

Liegt an dem in der vorgesetzten Position arretierten und mit dem zu handhabenden Blech 4 in Kontakt befindlichen Sauger 10 ein von dem Ejektor 13 erzeugter Unterdruck an und befinden sich die übrigen an dem ebenen Bereich des Blechs 4 angelegten Sauger 10 der Handlingvorrichtung 1 in einem entsprechenden Betriebszustand, so ist das Blech 4 an den Saugerplatten 7 der Handlingeinheit 1 sicher fixiert und das Blech 4 kann durch eine entsprechende Bewegung der Handlingeinheit 1 von der Werkstückauflage 3 der Werkzeugmaschine 2 abgehoben und zu dem gewünschten Ablageort transportiert werden.

An dem Ablageort wird der Ejektor 13 abgeschaltet und für jeden der an dem Blech 4 angelegten Sauger 10 wird die Anschlussleitung 14 zwischen dem Ejektor 13 und dem Funktionsraum 12 des Saugers 10 belüftet. Infolgedessen bauen sich der in dem Funktionsraum 12 des Saugers 10 bis dahin herrschende Unterdruck und die daraus resultierende, von dem Sauger 10 auf das Blech 4 ausgeübte Haltekraft ab und das Blech 4 kann sich bei entsprechender Anordnung unter Schwerkraftwirkung von dem Sauger 10 lösen. Durch Abblasen an dem Sauger 10 kann die Trennung des Blechs 4 von dem Sauger 10 unterstützt werden.

Beim Zustellen des Saugers 10 aus der zurückgesetzten Position in die vorgesetzte Position wird die Rückstellfeder 27 des Rückstellantriebs 17 aufgrund der mit dem Zustellen des Saugers 10 verbundenen Bewegung des Hubstößels 20 auf Druck vorgespannt. Bei vorgesetztem Sauger 10 befindet sich der mit der Rückstellfeder 27 versehene Federmotor 26 folglich in einem Rückstell-Bereitschaftszustand.

Um den Sauger 10 aus der vorgesetzten Position in die zurückgesetzte Position rückzustellen, wird der im Rückstell-Bereitschaftszustand befindliche Federmotor 26 entsprechend angesteuert. Zu diesem Zweck wird die Verriegelungsvorrichtung 36 der Saugereinheit 9 aus dem Verriegelungszustand in den Entriegelungszustand geschaltet. Dies geschieht, indem der zuvor erzeugte Sperrdruck abgebaut wird.

Zum Abbauen des Sperrdrucks wird der Führungsraum 22 oder der Zylinderraum 32 im Inneren des Führungsgehäuses 21 der jeweiligen Saugereinheit 9 entlüftet.

Nach dem Überführen der Verriegelungsvorrichtung 36 in den Entriegelungszustand wird der Sauger 10 durch die sich entspannende Rückstellfeder 27 des Federmotors 26 selbsttätig in die zurückgesetzte Position rückgestellt. Dabei wird die Anschlussleitung 14 zwischen dem Ejektor 13 und dem Funktionsraum 12 des Saugers 10 durch den Hubstößel 20 ohne weiteres gesperrt. Der Sauger 10 befindet sich damit wieder in dem anfänglichen Außerfunktionszustand.

## Patentansprüche

1. Werkstück-Haltevorrichtung mit einer Tragstruktur (8) sowie mit Halteeinheiten (9), die an der Tragstruktur (8) vorgesehen sind und die jeweils aufweisen:
• ein Halteelement (10),
• eine gesteuert betätigbare Schaltvorrichtung (18), mittels derer das Halteelement (10) in einen Funktionsbereitschaftszustand und in einen Außerfunktionszustand schaltbar ist, wobei das in den Funktionsbereitschaftszustand geschaltete Halteelement (10), nicht aber das in den Außerfunktionszustand geschaltete Halteelement (10) mit einer Quelle für ein Funktionsmedium verbunden ist, mittels dessen an dem Halteelement (10) eine auf ein Werkstück (4) ausübbare Haltekraft erzeugbar ist, sowie
• einen gesteuert betätigbaren motorischen Positionierantrieb (16), mittels dessen das Halteelement (10) relativ zu der Tragstruktur (8) längs einer Zustellbahn aus einer zurückgesetzten Position in eine vorgesetzte Position zustellbar ist und der einen mittels eines strömungsfähigen Antriebsdruckmediums betriebenen, vorzugsweise pneumatischen, Antriebsmotor (31) aufweist, der als Kolben-Zylinder-Einheit ausgebildet ist und auf den eine das strömungsfähige Antriebsdruckmedium erzeugende Antriebsdruckquelle (34) gesteuert aufschaltbar ist,
wobei
• der motorische Positionierantrieb (16) wenigstens einer Halteeinheit (9) ein Antriebselement (20) aufweist, das aufgrund der Betätigung des motorischen Positionierantriebs (16) mit einer Antriebsbewegung antreibbar ist und das aufgrund einer Antriebsbewegung das Halteelement (10) der betreffenden Halteeinheit (9) längs der Zustellbahn aus der zurückgesetzten Position in die vorgesetzte Position zustellt, wobei das in die vorgesetzte Position zugestellte Halteelement (10) gegen eine Zustellung in Richtung auf die zurückgesetzte Position arretierbar ist,
• die motorischen Positionierantriebe (16) der Halteeinheiten (9) derart aufeinander abgestimmt betätigbar sind, dass die Halteelemente (10) der Halteeinheiten (9) längs der Zustellbahnen unter Ausbildung einer unebenen Haltekontur zustellbar sind,
• mittels der jeweiligen Schaltvorrichtung (18) das Halteelement (10) einer Halteeinheit (9) derart schaltbar ist, dass das Halteelement (10) in der zurückgesetzten Position in den Außerfunktionszustand und in der vorgesetzten Position in den Funktionsbereitschaftszustand geschaltet ist,
• an wenigstens einer Halteeinheit (9) das Antriebselement (20) des motorischen Positionierantriebs (16) als schaltendes Antriebselement (20) ausgebildet ist und ein Schaltelement der Schaltvorrichtung (18) für das Halteelement (10) der Halteeinheit (9) ausbildet,
• aufgrund der Betätigung des motorischen Positionierantriebs (16) der Halteeinheit (9) das betreffende Halteelement (10) mittels des schaltenden Antriebselements (20) aus der zurückgesetzten Position in die vorgesetzte Position zustellbar und aus dem Außerfunktionszustand in den Funktionsbereitschaftszustand schaltbar ist und
• als schaltendes Antriebselement (20) ein Stößel vorgesehen und in einem Führungsraum (22) eines Führungsgehäuses (21) der Halteeinheit (9) zur Ausführung einer durch Betätigung des motorischen Positionierantriebs (16) erzeugten Antriebs-Schaltbewegung geführt ist, wobei aufgrund der Antriebs-Schaltbewegung des Stößels das Halteelement (10) der Halteeinheit (9) aus der zurückgesetzten Position in die vorgesetzte Position zustellbar und aus dem Au-βerfunktionszustand in den Funktionsbereitschaftszustand schaltbar ist,
**dadurch gekennzeichnet,**
**dass** der Kolben der als Antriebsmotor (31) des motorischen Positionierantriebs (16) vorgesehenen Kolben-Zylinder-Einheit den als schaltendes Antriebselement (20) vorgesehenen Stößel und der Zylinder der als Antriebsmotor (31) des motorischen Positionierantriebs (16) vorgesehenen Kolben-Zylinder-Einheit das Führungsgehäuse (21) der Halteeinheit (9) ausbilden, wobei als Führungsraum (22) des Führungsgehäuses (21) ein Zylinderraum (32) vorgesehen ist, der von einer als Kolbenfläche (33) vorgesehenen Fläche des Stö-βels begrenzt ist und auf den zur Erzeugung der Antriebs-Schaltbewegung des Stößels die das strömungsfähige Antriebsdruckmedium erzeugende Antriebsdruckquelle (34) gesteuert aufschaltbar und der dadurch mit strömungsfähigem Antriebsdruckmedium beaufschlagbar ist und
**dass** zur Arretierung des in die vorgesetzte Position zugestellten Halteelements (10) eine Arretierungsvorrichtung (36) vorgesehen ist, mittels derer das in die vorgesetzte Position zugestellte Halteelement (10) durch einen in dem Zylinderraum (32) des Führungsgehäuses (21) anstehenden Sperrdruck gegen eine Zustellung in Richtung auf die zurückgesetzte Position arretierbar ist, wobei der Sperrdruck mittels der über eine Verbindungsleitung auf den Zylinderraum (32) des Führungsgehäuses (21) aufgeschalteten Antriebsdruckquelle (34) erzeugbar ist, wobei die Antriebsdruckquelle (34) zur Einleitung der Antriebs-Schaltbewegung des Stößels über ein in einen durchlässigen Zustand geschaltetes Absperrventil (35) auf den Zylinderraum (32) des Führungsgehäuses (21) aufschaltbar ist und nach der Einleitung der Antriebs-Schaltbewegung des als Stößel vorgesehenen Kolbens das Absperrventil (35) in einen sperrenden Zustand schaltbar und die Antriebsdruckquelle (34) an dem in den sperrenden Zustand geschalteten Absperrventil (35) vorbei auf den Zylinderraum (32) des Führungsgehäuses (21) aufgeschaltet ist.

2. Werkstück-Haltevorrichtung nach Anspruch 1, **dadurch gekennzeichnet, dass** der motorische Positionierantrieb (16) wenigstens einer weiteren mit der Halteeinheit (9) insoweit baugleichen Halteeinheit (9) ebenfalls einen mittels eines strömungsfähigen Antriebsdruckmediums betriebenen, vorzugsweise pneumatischen, Antriebsmotor (31) aufweist und dass die das strömungsfähige Antriebsdruckmedium erzeugende Antriebsdruckquelle (34) als gemeinsame Antriebsdruckquelle (34) gesteuert auf die Antriebsmotoren (31) der motorischen Positionierantriebe (16) der baugleichen Halteeinheiten (9) aufschaltbar ist.

3. Werkstück-Haltevorrichtung nach einem der vorhergehenden Ansprüche,
**dadurch gekennzeichnet, dass** wenigstens eine der Halteeinheiten (9) zusätzlich zu dem motorischen Positionierantrieb (16) einen gesteuert betätigbaren motorischen Rückstellantrieb (17) aufweist, mittels dessen das Halteelement (10) der Halteeinheit (9) relativ zu der Tragstruktur (8) längs einer Rückstellbahn aus der vorgesetzten Position in die zurückgesetzte Position rückstellbar ist,
• wobei der motorische Rückstellantrieb (17) des Halteelements (10) ein Rückstellelement (20) aufweist, das aufgrund der Betätigung des motorischen Rückstellantriebs (17) mit einer Rückstellbewegung antreibbar ist und das aufgrund einer Rückstellbewegung das Halteelement (10) längs der Rückstellbahn aus der vorgesetzten Position in die zurückgesetzte Position rückstellt,
• wobei das Rückstellelement (20) des motorischen Rückstellantriebs (17) als schaltendes Rückstellelement (20) ausgebildet ist und ein Schaltelement der Schaltvorrichtung (18) für das Halteelement (10) der Halteeinheit (9) ausbildet und
• wobei aufgrund der Betätigung des motorischen Rückstellantriebs (17) der Halteeinheit (9) das betreffende Halteelement (10) mittels des schaltenden Rückstellelements (20) aus der vorgesetzten Position in die zurückgesetzte Position rückstellbar und aus dem Funktionsbereitschaftszustand in den Au-βerfunktionszustand schaltbar ist.

4. Werkstück-Haltevorrichtung nach Anspruch 3, **dadurch gekennzeichnet, dass** als schaltendes Rückstellelement (20) des motorischen Rückstellantriebs (17) das schaltende Antriebselement (20) des motorischen Positionierantriebs (16) vorgesehen ist.

5. Werkstück-Haltevorrichtung nach Anspruch 3 oder Anspruch 4, **dadurch gekennzeichnet, dass** der motorische Rückstellantrieb (17) einen gesteuert betätigbaren Rückstellmotor (26) aufweist, der aufgrund der Zustellung des Halteelements (10) aus der zurückgesetzten Position in die vorgesetzte Position in einen Rückstell-Bereitschaftszustand überführbar ist, wobei der in den Rückstell-Bereitschaftszustand überführte Rückstellmotor (26) das in die vorgesetzte Position zugestellte Halteelement (10) in Richtung auf die zurückgesetzte Position beaufschlagt und zur Erzeugung der Rückstellung des Halteelements (10) ansteuerbar ist.

6. Werkstück-Haltevorrichtung nach Anspruch 5, **dadurch gekennzeichnet, dass** als Rückstellmotor (26) des motorischen Rückstellantriebs (17) ein Federmotor vorgesehen ist, der eine Rückstellfeder (27) aufweist und der in den Rückstell-Bereitschaftszustand überführbar ist, indem die Rückstellfeder (27) aufgrund der Zustellung des Halteelements (10) aus der zurückgesetzten Position in die vorgesetzte Position vorspannbar ist.

7. Werkstück-Haltevorrichtung nach Anspruch 5 oder Anspruch 6, **dadurch gekennzeichnet, dass** der in den Rückstell-Bereitschaftszustand überführte Rückstellmotor (26) das in die vorgesetzte Position zugestellte Halteelement (10) in Richtung auf die zurückgesetzte Position beaufschlagt, indem der in den Rückstell-Bereitschaftszustand überführte Rückstellmotor (26) das in eine der vorgesetzten Position des Halteelements (10) zugeordnete Position bewegte schaltende Rückstellelement (20) in Richtung auf eine der zurückgesetzten Position des Halteelements (10) zugeordnete Position beaufschlagt.

8. Werkstück-Haltevorrichtung nach einem der Ansprüche 3-7 wobei als schaltendes Rückstellelement der als schaltendes Antriebselement vorgesehene Stößel vorgesehen ist,
**dadurch gekennzeichnet, dass** der Rückstellmotor (26) den in eine der zurückgesetzten Position des Halteelements (10) zugeordnete Position bewegten Stö-βel in Richtung auf eine mit einem Einlass (44) für das strömungsfähige Antriebsdruckmedium versehene Wand des Zylinderraums (32) beaufschlagt, wobei die als Kolbenfläche (33) vorgesehenen Fläche des Stößels den Einlass (44) für das strömungsfähige Antriebsdruckmedium überdeckt und dass ein Abstandhalter (45) vorgesehen ist, mittels dessen die als Kolbenfläche (33) vorgesehenen Fläche des Stößels auf Abstand von dem Einlass (44) für das strömungsfähige Antriebsdruckmedium gehalten ist.

9. Werkstück-Haltevorrichtung nach Anspruch 5, **dadurch gekennzeichnet, dass** der in den Rückstell-Bereitschaftszustand überführte Rückstellmotor (26) bei in die vorgesetzte Position zugestelltem Halteelement (10) durch Aufheben der Arretierung des Halteelements (10) ansteuerbar ist zur Erzeugung der Rückstellung des Halteelements (10).

10. Werkstück-Haltevorrichtung nach einem der vorhergehenden Ansprüche,
**dadurch gekennzeichnet,**
• **dass** die Halteeinheit (9) als Saugereinheit ausgebildet ist und als Halteelement (10) einen Sauger aufweist mit einem werkstückseitig mündenden Funktionsraum (12),
• **dass** als Quelle für ein Funktionsmedium eine Unterdruckquelle (13) vorgesehen ist, mittels derer als Funktionsmedium ein Unterdruck erzeugbar ist,
• **dass** zwischen dem Funktionsraum (12) des Saugers und der Unterdruckquelle (13) eine Anschlussleitung (14) vorgesehen ist, über welche der Funktionsraum (12) des Saugers an die Unterdruckquelle (13) angeschlossen ist und
• **dass** der Sauger aus dem Außerfunktionszustand in den Funktionsbereitschaftszustand schaltbar ist, indem das schaltende Antriebselement (20) mit einer Antriebsbewegung, aufgrund derer der Sauger aus der zurückgesetzten Position in die vorgesetzte Position zustellbar ist, aus einer Sperrstellung, in welcher das schaltende Antriebselement (20) die Anschlussleitung (14) zwischen dem Funktionsraum (12) des Saugers und der Unterdruckquelle (13) sperrt, in eine Freigabestellung bewegbar ist, in welcher das schaltende Antriebselement (20) die Anschlussleitung (14) zwischen dem Funktionsraum (12) des Saugers und der Unterdruckquelle (13) freigibt.

11. Werkstück-Haltevorrichtung nach Anspruch 3, **dadurch gekennzeichnet,**
• **dass** die Halteeinheit (9) als Saugereinheit ausgebildet ist und als Halteelement (10) einen Sauger aufweist mit einem werkstückseitig mündenden Funktionsraum (12),
• **dass** als Quelle für ein Funktionsmedium eine Unterdruckquelle (13) vorgesehen ist, mittels derer als Funktionsmedium ein Unterdruck erzeugbar ist,
• **dass** zwischen dem Funktionsraum (12) des Saugers und der Unterdruckquelle (13) eine Anschlussleitung (14) vorgesehen ist, über welche der Funktionsraum (12) des Saugers an die Unterdruckquelle (13) angeschlossen ist und
• **dass** der Sauger aus dem Funktionsbereitschaftszustand in den Außerfunktionszustand schaltbar ist, indem das schaltende Rückstellelement (20) mit einer Rückstellbewegung, aufgrund derer der Sauger aus der vorgesetzten Position in die zurückgesetzte Position rückstellbar ist, aus einer Freigabestellung, in welcher das schaltende Rückstellelement (20) die Anschlussleitung (14) zwischen dem Funktionsraum (12) des Saugers und der Unterdruckquelle (13) freigibt, in eine Sperrstellung bewegbar ist, in welcher das schaltende Rückstellelement (20) die Anschlussleitung (14) zwischen dem Funktionsraum (12) des Saugers und der Unterdruckquelle (13) sperrt.

12. Werkstück-Haltevorrichtung nach einem der Ansprüche 10, 11 **dadurch gekennzeichnet, dass** ein saugerseitiger Abschnitt (23) der Anschlussleitung (14) zwischen dem Funktionsraum (12) des Saugers und der Unterdruckquelle (13) durch das schaltende Antriebselement (20) und/oder durch das schaltende Rückstellelement (20) verläuft.

13. Werkstück-Haltevorrichtung nach einem der Ansprüche 10 bis 12, **dadurch gekennzeichnet, dass** ein gehäuseseitiger Abschnitt (24) der Anschlussleitung (14) zwischen dem Funktionsraum (12) des Saugers und der Unterdruckquelle 13 durch das Führungsgehäuse (21) verläuft und an einer in der Bewegungsrichtung des Stößels verlaufenden Wand des als Führungsraum (22) des Führungsgehäuses (21) vorgesehenen Zylinderraums (32) eine Mündung (25) aufweist und dass das schaltende Antriebselement (20) und/oder das schaltende Rückstellelement (20) die Mündung (25) des gehäuseseitigen Abschnitts (24) der Anschlussleitung (14) in der Sperrstellung verschließt und in der Freigabestellung offen lässt.

14. Werkstück-Handlingvorrichtung, mit einer Werkstück-Haltevorrichtung (7) , an welcher ein zu handhabendes Werkstück lösbar fixierbar ist sowie mit einem motorischen Handlingantrieb, mittels dessen die Werkstück-Haltevorrichtung (7) gemeinschaftlich mit dem zu handhabenden Werkstück und/oder ohne das zu handhabende Werkstück bewegbar ist, **dadurch gekennzeichnet, dass** als Werkstück-Haltevorrichtung die Werkstück-Haltevorrichtung (7) nach einem der vorhergehenden Ansprüche vorgesehen ist.

15. Maschinelle Anordnung zum Bearbeiten von Werkstücken, insbesondere von Blechen, mit einer Bearbeitungsvorrichtung (2) , mittels derer ein Werkstück bearbeitbar ist sowie mit einer Werkstück-Handlingvorrichtung (1), mittels derer der Bearbeitungsvorrichtung (2) ein zu bearbeitendes Werkstück zuführbar ist und/ oder mittels derer ein bearbeitetes Werkstück von der Bearbeitungsvorrichtung (2) abführbar ist, **dadurch gekennzeichnet, dass** als Werkstück-Handlingvorrichtung die Werkstück-Handlingvorrichtung (1) gemäß Anspruch 14 vorgesehen ist.

## Claims

1. Workpiece holding device comprising a supporting structure (8) and holding units (9) which are provided on the supporting structure (8) and which each comprise:
• a holding element (10),
• a switching device (18), which can be actuated in a controlled manner and by means of which the holding element (10) can be switched into a functional readiness state and into a non-operational state, wherein the holding element (10) switched into the functional readiness state, but not the holding element (10) switched into the non-operational state, is connected to a source for a functional medium by means of which a holding force that can be exerted on a workpiece (4) can be generated on the holding element (10), and
• a motorized positioning drive (16) which can be actuated in a controlled manner and by means of which the holding element (10) can be moved relative to the supporting structure (8) along a movement path from a rearward position into a forward position and which has a preferably pneumatic drive motor (31) operated by means of a flowable drive pressure medium, which drive motor is designed as a piston-cylinder unit and to which a drive pressure source (34) producing the flowable drive pressure medium can be connected in a controlled manner,
wherein
• the motorized positioning drive (16) of at least one holding unit (9) has a drive element (20) which can be driven with a drive movement due to the actuation of the motorized positioning drive (16) and which, due to a drive movement, moves the holding element (10) of the relevant holding unit (9) along the movement path from the rearward position into the forward position, wherein the holding element (10) moved into the forward position can be locked against movement in the direction of the rearward position,
• the motorized positioning drives (16) of the holding units (9) can be actuated in a coordinated manner in such a way that the holding elements (10) of the holding units (9) can be moved along the movement paths while forming an uneven holding contour,
• by means of the relevant switching device (18), the holding element (10) of a holding unit {9) can be switched in such a way that the holding element (10) is switched into the non-operational state in the rearward position and into the functional readiness state in the forward position,
• on at least one holding unit (9), the drive element (20) of the motorized positioning drive (16) is designed as a switching drive element (20) and forms a switching element of the switching device (18) for the holding element (10) of the holding unit (9),
• due to the actuation of the motorized positioning drive (16) of the holding unit (9), the relevant holding element (10) can be moved from the rearward position into the forward position by means of the switching drive element (20) and can be switched from the non-operational state into the functional readiness state, and
• a ram is provided as the switching drive element (20) and is guided in a guide space (22) of a guide housing (21) of the holding unit (9) for carrying out a drive switching movement generated by actuation of the motorized positioning drive (16), wherein, due to the drive switching movement of the ram, the holding element (10) of the holding unit (9) can be moved from the rearward position into the forward position and can be switched from the non-operational state into the functional readiness state,
**characterized**
**in that** the piston of the piston-cylinder unit provided as the drive motor (31) of the motorized positioning drive (16) forms the ram provided as the switching drive element (20) and the cylinder of the piston-cylinder unit provided as the drive motor (31) of the motorized positioning drive (16) forms the guide housing (21) of the holding unit (9), a cylinder chamber (32) being provided as the guide space (22) of the guide housing (21), which cylinder chamber is delimited by a surface of the ram provided as a piston surface (33) and to which cylinder chamber the drive pressure source (34) producing the flowable drive pressure medium can be connected in a controlled manner in order to produce the drive switching movement of the ram, and which cylinder chamber can thus be subjected to flowable drive pressure medium, and
**in that** a locking device (36) is provided for locking the holding element (10) moved into the forward position, by means of which locking device the holding element (10) moved into the forward position can, by means of a blocking pressure which is present in the cylinder chamber (32) of the guide housing (21), be locked against movement in the direction of the rearward position, wherein the blocking pressure can be generated by means of the drive pressure source (34) connected via a connecting line to the cylinder chamber (32) of the guide housing (21), wherein the drive pressure source (34) can be connected to the cylinder chamber (32) of the guide housing (21) via a shut-off valve (35), which is switched into a permeable state, in order to initiate the drive switching movement of the ram, and after the drive switching movement of the piston provided as the ram has been introduced, the shut-off valve (35) can be switched into a blocking state and the drive pressure source (34) is connected to the cylinder chamber (32) of the guide housing (21) at the shut-off valve (35) switched into the blocking state.

2. Workpiece holding device according to claim 1, **characterized in that** the motorized positioning drive (16) of at least one further holding unit (9), which is structurally identical to the holding unit (9), likewise has a preferably pneumatic drive motor (31) operated by means of a flowable drive pressure medium, and **in that** the drive pressure source (34) producing the flowable drive pressure medium can be connected as a common drive pressure source (34) in a controlled manner to the drive motors (31) of the motor positioning drives (16) of the structurally identical holding units (9).

3. Workpiece holding device according to either of the preceding claims, **characterized in that** at least one of the holding units (9) has, in addition to the motorized positioning drive (16), a motorized return drive (17), which can be actuated in a controlled manner and by means of which the holding element (10) of the holding unit (9) can be returned relative to the supporting structure (8) along a return path from the forward position into the rearward position,
• the motorized return drive (17) of the holding element (10) having a return element (20) which can be driven with a return movement due to the actuation of the motorized return drive (17) and which, due to a return movement, returns the holding element (10) along the return path from the forward position into the rearward position,
• the return element (20) of the motorized return drive (17) being designed as a switching return element (20) and forming a switching element of the switching device (18) for the holding element (10) of the holding unit (9), and
• due to the actuation of the motorized return drive (17) of the holding unit (9), the relevant holding element (10) being able to be returned from the forward position into the rearward position by means of the switching return element (20) and being able to be switched from the functional readiness state into the non-operational state.

4. Workpiece holding device according to claim 3, **characterized in that** the switching drive element (20) of the motorized positioning drive (16) is provided as the switching return element (20) of the motorized return drive (17).

5. Workpiece holding device according to either claim 3 or claim 4, **characterized in that** the motorized return drive (17) has a return motor (26) which can be actuated in a controlled manner and which, due to the movement of the holding element (10) from the rearward position into the forward position, can be transferred into a return readiness state, the return motor (26) transferred into the return readiness state acting on the holding element (10) moved into the forward position in the direction of the rearward position and being controlable for generating the return of the holding element (10).

6. Workpiece holding device according to claim 5, **characterized in that** a spring motor is provided as the return motor (26) of the motorized return drive (17), which spring motor has a return spring (27) and can be transferred into the return readiness state by the return spring (27) being preloadable due to the movement of the holding element (10) from the rearward position into the forward position.

7. Workpiece holding device according to either claim 5 or claim 6, **characterized in that** the return motor (26) transferred into the return readiness state acts on the holding element (10), which is fed into the forward position, in the direction of the rearward position **in that** the return motor (26) transferred into the return readiness state acts on the switching return element (20) moved into a position assigned to the forward position of the holding element (10) in the direction of a position assigned to the rearward position of the holding element (10).

8. Workpiece holding device according to any of claims 3 to 7, wherein the ram provided as the switching drive element is provided as the switching return element, **characterized in that** the return motor (26) acts on the ram, which is moved into a position assigned to the rearward position of the holding element (10), in the direction of a wall of the cylinder chamber (32) provided with an inlet (44) for the flowable drive pressure medium, wherein the surface of the ram provided as a piston surface (33) covers the inlet (44) for the flowable drive pressure medium and that a spacer (45) is provided, by means of which the surface of the ram provided as the piston surface (33) is held at a distance from the inlet (44) for the flowable drive pressure medium.

9. Workpiece holding device according to claim 5, **characterized in that** the return motor (26) transferred into the return readiness state is controllable when the holding element (10) is in the forward position, by releasing the locking of the holding element (10) to produce the return of the holding element (10).

10. Workpiece holding device according to any of the preceding claims, **characterized**
• **in that** the holding unit (9) is designed as a suction unit and has, as a holding element (10), a suction means with a functional chamber (12) which opens towards the workpiece side,
• **in that** a negative pressure source (13) is provided as the source for a functional medium, by means of which negative pressure source a negative pressure can be generated as the functional medium,
• **in that** a connection line (14) is provided between the functional space (12) of the suction means and the negative pressure source (13), via which connection line the functional space (12) of the suction means is connected to the negative pressure source (13), and
• **in that** the suction means can be switched from the non-operational state into the functional readiness state by the switching drive element (20) being movable from a blocking position, in which the switching drive element (20) blocks the connection line (14) between the functional space (12) of the suction means and the negative pressure source (13), into a release position, in which the switching drive element (20) releases the connection line (14) between the functional space (12) of the suction means and the negative pressure source (13), with a drive movement, on the basis of which the suction means can be moved from the rearward position into the forward position.

11. Workpiece holding device according to claim 3, **characterized**
• **in that** the holding unit (9) is designed as a suction unit and has, as a holding element (10), a suction means with a functional chamber (12) which opens towards the workpiece side,
• **in that** a negative pressure source (13) is provided as the source for a functional medium, by means of which negative pressure source a negative pressure can be generated as the functional medium,
• **in that** a connection line (14) is provided between the functional space (12) of the suction means and the negative pressure source (13), via which connection line the functional space (12) of the suction means is connected to the negative pressure source (13), and
• **in that** the suction means can be switched from the functional readiness state into the non-operational state by the switching return element (20) being movable from a release position, in which the switching return element (20) releases the connection line (14) between the functional space (12) of the suction means and the negative pressure source (13), into a blocking position, in which the switching return element (20) blocks the connection line (14) between the functional space (12) of the suction means and the negative pressure source (13), with a return movement, on the basis of which the suction means can be returned from the forward position into the rearward position.

12. Workpiece holding device according to any of claims 10, 11 **characterized in that** a suction-means-side portion (23) of the connection line (14) between the functional space (12) of the suction means and the negative pressure source (13) extends through the switching drive element (20) and/or through the switching return element (20).

13. Workpiece holding device according to any of claims 10 to 12, **characterized in that** a housing-side portion (24) of the connection line (14) between the functional space (12) of the suction means and the negative pressure source (13) extends through the guide housing (21) and has an opening (25) on a wall of the cylinder chamber (32) which wall extends in the direction of movement of the ram and which cylinder chamber (32) is provided as the guide space (22) of the guide housing (21), and **in that** the switching drive element (20) and/or the switching return element (20) closes the opening (25) of the housing-side portion (24) of the connection line (14) in the blocking position and leaves said opening open in the release position.

14. Workpiece handling device, comprising a workpiece holding device (7), on which a workpiece to be handled can be detachably fixed, and comprising a motorized handling drive, by means of which the workpiece holding device (7) can be moved jointly with the workpiece to be handled and/or without the workpiece to be handled, **characterized in that** the workpiece holding device (7) according to any of the preceding claims is provided as the workpiece holding device.

15. Machine arrangement for machining workpieces, in particular metal sheets, comprising a machining device (2), by means of which a workpiece can be machined, and comprising a workpiece handling device (1), by means of which a workpiece to be machined can be fed to the machining device (2) and/or by means of which a machined workpiece can be discharged from the machining device (2), **characterized in that** the workpiece handling device (1) according to claim 14 is provided as the workpiece handling device.

## Revendications

1. Dispositif de retenue de pièce à usiner avec une structure de support (8) ainsi que des unités de retenue (9) qui sont prévues sur la structure de support (8) et qui présentent respectivement :
• un élément de retenue (10),
• un dispositif de commutation (18) pouvant être actionné de manière commandée, au moyen duquel l'élément de retenue (10) peut être commuté dans un état opérationnel et dans un état non-opérationnel, l'élément de retenue (10) commuté dans l'état opérationnel, mais pas l'élément de retenue (10) commuté dans l'état non-opérationnel, étant relié à une source pour un milieu de fonctionnement au moyen duquel une force de retenue pouvant être exercée sur une pièce à usiner (4) peut être générée sur l'élément de retenue (10), et
• un entraînement de positionnement motorisé (16) pouvant être actionné de manière commandée, au moyen duquel l'élément de retenue (10) peut être ajusté par rapport à la structure de support (8) le long d'un trajet d'ajustement depuis une position reculée vers une position avancée et qui présente un moteur d'entraînement (31), de préférence pneumatique, qui est actionné au moyen d'un milieu de pression d'entraînement fluide, qui est réalisé sous la forme d'une unité piston-cylindre et sur lequel une source de pression d'entraînement (34) générant le milieu de pression d'entraînement fluide peut être connectée de manière commandée,
• l'entraînement de positionnement motorisé (16) d'au moins une unité de retenue (9) présentant un élément d'entraînement (20), qui peut être entraîné par un déplacement d'entraînement en raison de l'actionnement du dispositif d'entraînement de positionnement motorisé (16) et qui, en raison d'un déplacement d'entraînement, ajuste l'élément de retenue (10) de l'unité de retenue (9) concernée le long du trajet d'ajustement depuis la position reculée vers la position avancée, l'élément de retenue (10) ajusté dans la position avancée pouvant être bloqué contre un ajustement dans la direction de la position reculée,
• les entraînements de positionnement motorisés (16) des unités de retenue (9) pouvant être actionnés de manière coordonnée les uns avec les autres de telle sorte que les éléments de retenue (10) des unités de retenue (9) peuvent être ajustés le long des trajets d'ajustement en formant un contour de retenue irrégulier,
• au moyen du dispositif de commutation respectif (18), l'élément de retenue (10) d'une unité de retenue (9) pouvant être commuté de telle sorte que l'élément de retenue (10) est commuté dans la position reculée dans l'état non-opérationnel et dans la position avancée dans l'état opérationnel,
• au niveau d'au moins une unité de retenue (9), l'élément d'entraînement (20) de l'entraînement de positionnement motorisé (16) étant réalisé sous la forme d'un élément d'entraînement de commutation (20) et forme un élément de commutation du dispositif de commutation (18) pour l'élément de retenue (10) de l'unité de retenue (9),
• en raison de l'actionnement de l'entraînement de positionnement motorisé (16) de l'unité de retenue (9), l'élément de retenue (10) concerné pouvant être ajusté depuis la position reculée vers la position avancée au moyen de l'élément d'entraînement de commutation (20) et pouvant être commuté de l'état non-opérationnel à l'état opérationnel, et
• en tant qu'élément d'entraînement de commutation (20), un poussoir étant prévu et étant guidé dans un espace de guidage (22) d'un boîtier de guidage (21) de l'unité de retenue (9) pour effectuer un déplacement de commutation d'entraînement généré par l'actionnement de l'entraînement de positionnement motorisé (16), l'élément de retenue (10) de l'unité de retenue (9) pouvant être ajusté de la position reculée à la position avancée et pouvant être commuté de l'état non-opérationnel à l'état opérationnel en raison du déplacement de commutation d'entraînement du poussoir,
**caractérisé en ce que**
le piston de l'unité piston-cylindre prévue en tant que moteur d'entraînement (31) de l'entraînement de positionnement motorisé (16) forme le poussoir prévu en tant qu'élément d'entraînement de commutation (20) et le cylindre de l'unité piston-cylindre prévue en tant que moteur d'entraînement (31) de l'entraînement de positionnement motorisé (16) forme le boîtier de guidage (21) de l'unité de retenue (9), une chambre de cylindre (32) étant prévue en tant qu'espace de guidage (22) du boîtier de guidage (21), qui est limité par une surface du poussoir prévue en tant que surface de piston (33) et sur laquelle la source de pression d'entraînement (34) générant le milieu de pression d'entraînement fluide peut être connectée de manière commandée pour générer le déplacement de commutation d'entraînement du poussoir et qui peut ainsi être alimenté en milieu de pression d'entraînement fluide, et
un dispositif de blocage (36) est prévu pour le blocage de l'élément de retenue (10) ajusté dans la position supérieure, au moyen duquel l'élément de retenue (10) ajusté dans la position avancée peut être bloqué par une pression de blocage appliquée dans la chambre de cylindre (32) du boîtier de guidage (21) à l'encontre d'un ajustement dans la direction de la position reculée, la pression de blocage pouvant être générée au moyen de la source de pression d'entraînement (34) connectée sur la chambre de cylindre (32) du boîtier de guidage (21) par l'intermédiaire d'une conduite de liaison, la source de pression d'entraînement (34) pouvant être connectée pour initiation du déplacement de commutation d'entraînement du poussoir par l'intermédiaire d'une soupape d'arrêt (35) commutée dans un état de transmission sur la chambre de cylindre (32) du boîtier de guidage (21), et après l'initiation du déplacement de commutation d'entraînement du piston prévu comme poussoir, la soupape d'arrêt (35) pouvant être commutée dans un état de blocage et la source de pression d'entraînement (34) étant connectée sur la chambre de cylindre (32) du boîtier de guidage (21) en passant le long la soupape d'arrêt (35) commutée dans l'état de blocage.

2. Dispositif de retenue de pièce à usiner selon la revendication 1, **caractérisé en ce que** l'entraînement de positionnement motorisé (16) d'au moins une unité de retenue (9) supplémentaire de même construction que l'unité de retenue (9) présente également un moteur d'entraînement (31), de préférence pneumatique, qui est entraîné au moyen d'un milieu de pression d'entraînement fluide et **en ce que** la source de pression d'entraînement (34) qui génère le milieu de pression d'entraînement fluide peut être connectée en tant que source de pression d'entraînement (34) commune, de manière commandée, sur les moteurs d'entraînement (31) des entraînements de positionnement motorisés (16) des unités de retenue (9) de même construction.

3. Dispositif de retenue de pièce à usiner selon l'une quelconque des revendications précédentes,
**caractérisé en ce qu'**au moins une des unités de retenue (9) présente, en plus de l'entraînement de positionnement motorisé (16), un entraînement de rappel motorisé (17) pouvant être actionné de manière commandée, au moyen duquel l'élément de retenue (10) de l'unité de retenue (9) peut être rappelé, par rapport à la structure de support (8), de la position avancée à la position reculée le long d'un trajet de rappel,
• l'entraînement de rappel motorisé (17) de l'élément de retenue (10) présentant un élément de rappel (20) qui peut être entraîné par un déplacement de rappel en raison de l'actionnement de l'entraînement de rappel motorisé (17) et qui, en raison d'un déplacement de rappel, rappelle l'élément de retenue (10) le long du trajet de rappel de la position avancée à la position reculée,
• l'élément de rappel (20) de l'entraînement de rappel motorisé (17) étant réalisé sous la forme d'un élément de rappel de commutation (20) et formant un élément de commutation du dispositif de commutation (18) pour l'élément de retenue (10) de l'unité de retenue (9), et
• en raison de l'actionnement de l'entraînement de rappel motorisé (17) de l'unité de retenue (9), l'élément de retenue (10) concerné pouvant être rappelé de la position avancée à la position reculée au moyen de l'élément de rappel de commutation (20) et pouvant être commuté de l'état opérationnel à l'état non-opérationnel.

4. Dispositif de retenue de pièce à usiner selon la revendication 3, **caractérisé en ce que** l'élément d'entraînement de commutation (20) de l'entraînement de positionnement motorisé (16) est prévu comme élément de rappel de commutation (20) de l'entraînement de rappel motorisé (17).

5. Dispositif de retenue de pièce à usiner selon la revendication 3 ou la revendication 4, **caractérisé en ce que** l'entraînement de rappel motorisé (17) présente un moteur de rappel (26) pouvant être actionné de manière commandée, qui peut être transféré dans un état de disponibilité de rappel en raison de l'ajustement de l'élément de retenue (10) depuis la position reculée à la position avancée , le moteur de rappel (26) transféré dans l'état de disponibilité de rappel sollicitant l'élément de retenue (10) transféré dans la position avancée dans la direction de la position reculée et pouvant être commandé pour générer le mouvement der rappel de l'élément de retenue (10).

6. Dispositif de retenue de pièce à usiner selon la revendication 5, **caractérisé en ce qu'**un moteur à ressort est prévu comme moteur de rappel (26) de l'entraînement de rappel motorisé (17), qui présente un ressort de rappel (27) et qui peut être transféré dans l'état de disponibilité de rappel par le ressort de rappel (27) pouvant être précontraint en raison de l'ajustement de l'élément de retenue (10) de la position reculée à la position avancée.

7. Dispositif de retenue de pièce à usiner selon la revendication 5 ou la revendication 6, **caractérisé en ce que** le moteur de rappel (26) transféré dans l'état de disponibilité de rappel sollicite l'élément de retenue (10) ajusté dans la position avancée dans la direction de la position reculée, le moteur de rappel (26) transféré dans l'état de disponibilité de rappel sollicitant l'élément de rappel de commutation (20) déplacé dans une position associée à la position avancée de l'élément de retenue (10) dans la direction d'une position associée à la position reculée de l'élément de retenue (10).

8. Dispositif de retenue de pièce à usiner selon l'une quelconque des revendications 3 à 7, le poussoir prévu en tant qu'élément d'entraînement de commutation étant prévu en tant qu'élément de rappel de commutation,
**caractérisé en ce que** le moteur de rappel (26) sollicite le poussoir déplacé dans une position associée à la position reculée de l'élément de retenue (10) dans la direction d'une paroi de la chambre de cylindre (32) munie d'une entrée (44) pour le milieu de pression d'entraînement fluide, la surface du poussoir prévue en tant que surface de piston (33) recouvrant l'entrée (44) pour le milieu de pression d'entraînement fluide et **en ce qu'**un écarteur (45) est prévu, au moyen duquel la surface de poussoir prévue en tant que surface de piston (33) est maintenue à distance de l'entrée (44) pour le milieu de pression d'entraînement fluide.

9. Dispositif de retenue de pièce à usiner selon la revendication 5, **caractérisé en ce que** le moteur de rappel (26) transféré dans l'état de disponibilité de rappel peut être commandé, lorsque l'élément de retenue (10) est ajusté dans la position avancée, en annulant le blocage de l'élément de retenue (10) pour générer le rappel de l'élément de retenue (10).

10. Dispositif de retenue de pièce à usiner selon l'une quelconque des revendications précédentes, **caractérisé en ce que**
• l'unité de retenue (9) est réalisée sous la forme d'une unité d'aspiration et présente comme élément de retenue (10) un dispositif d'aspiration avec un espace fonctionnel (12) débouchant du côté de la pièce à usiner,
• une source de dépression (13) est prévue comme source pour un milieu de fonctionnement, au moyen de laquelle une dépression peut être générée en tant que milieu de fonctionnement,
• une conduite de raccordement (14) est prévue entre l'espace fonctionnel (12) du dispositif d'aspiration et la source de dépression (13), par l'intermédiaire de laquelle l'espace fonctionnel (12) du dispositif d'aspiration est raccordé à la source de dépression (13), et
• le dispositif d'aspiration peut être commuté de l'état non-opérationnel à l'état opérationnel, par l'élément d'entraînement de commutation (20) pouvant être ajusté avec un déplacement d'entraînement, grâce auquel le dispositif d'aspiration peut être déplacé de la position reculée à la position avancée, à partir d'une position de blocage, dans laquelle l'élément d'entraînement de commutation (20) bloque la conduite de raccordement (14) entre l'espace de fonctionnement (12) du dispositif d'aspiration et la source de dépression (13), vers une position de libération, dans laquelle l'élément d'entraînement de commutation (20) libère la conduite de raccordement (14) entre l'espace de fonctionnement (12) du dispositif d'aspiration et la source de dépression (13).

11. Dispositif de retenue de pièce à usiner selon la revendication 3, **caractérisé en ce que**
• l'unité de retenue (9) est réalisée sous la forme d'une unité d'aspiration et présente comme élément de retenue (10) un dispositif d'aspiration avec un espace fonctionnel (12) débouchant du côté de la pièce à usiner,
• une source de dépression (13) est prévue comme source pour un milieu de fonctionnement, au moyen de laquelle une dépression peut être générée en tant que milieu de fonctionnement,
• une conduite de raccordement (14) est prévue entre l'espace fonctionnel (12) du dispositif d'aspiration et la source de dépression (13), par l'intermédiaire de laquelle l'espace fonctionnel (12) du dispositif d'aspiration est raccordé à la source de dépression (13), et
• le dispositif d'aspiration peut être commuté de l'état opérationnel à l'état non-opérationnel, par l'élément de rappel de commutation (20) pouvant être rappelé avec un déplacement de rappel, grâce auquel le dispositif d'aspiration peut être rappelé de la position avancé à la position reculée, d'une position de libération, dans laquelle l'élément de rappel de commutation (20) libère la conduite de raccordement (14) entre l'espace fonctionnel (12) du dispositif d'aspiration et la source de dépression (13), à une position de blocage, dans laquelle l'élément de rappel de commutation (20) bloque la conduite de raccordement (14) entre l'espace de fonctionnement (12) du dispositif d'aspiration et la source de dépression (13).

12. Dispositif de retenue de pièce à usiner selon l'une quelconque des revendications 10, 11, **caractérisé en ce qu'**une section (23) côté dispositif d'aspiration de la conduite de raccordement (14) entre l'espace de fonctionnement (12) du dispositif d'aspiration et la source de dépression (13) passe par l'élément d'entraînement de commutation (20) et/ou par l'élément de rappel de commutation (20).

13. Dispositif de retenue de pièce à usiner selon l'une quelconque des revendications 10 à 12, **caractérisé en ce qu'**une section (24) côté boîtier de la conduite de raccordement (14) passe entre l'espace de fonctionnement (12) du dispositif d'aspiration et la source de dépression (13) à travers le boîtier de guidage (21) et présente une embouchure (25) sur une paroi de la chambre de cylindre (32) prévu comme espace de guidage (22) du boîtier de guidage (21) et s'étendant dans la direction de déplacement du poussoir, et **en ce que** l'élément d'entraînement de commutation (20) et/ou l'élément de rappel de commutation (20) ferme l'embouchure (25) de la section (24) côté boîtier de la conduite de raccordement (14) dans la position de blocage et la laisse ouverte dans la position de libération.

14. Dispositif de manipulation de pièce à usiner, avec un dispositif de retenue de pièce à usiner (7), sur lequel une pièce à usiner à manipuler peut être fixée de manière amovible, ainsi qu'avec un entraînement de manipulation motorisé, au moyen duquel le dispositif de retenue de pièce à usiner (7) peut être déplacé conjointement avec la pièce à usiner à manipuler et/ou sans la pièce à usiner à manipuler, **caractérisé en ce que** le dispositif de retenue de pièce à usiner (7) selon l'une quelconque des revendications précédentes est prévu comme dispositif de retenue de pièce à usiner.

15. Agencement d'usinage pour usiner des pièces à usiner, en particulier de tôles, avec un dispositif d'usinage (2) au moyen duquel une pièce à usiner peut être usiner ainsi qu'avec un dispositif de manipulation de pièce (1) à usiner au moyen duquel une pièce à usiner peut être amenée au dispositif d'usinage (2) et/ou au moyen duquel une pièce à usiner usinée peut être évacuée du dispositif d'usinage (2), **caractérisé en ce que** le dispositif de manipulation de pièce à usiner (1) selon la revendication 14 est prévu comme dispositif de manipulation de pièce à usiner.
